# EUROPÄISCHE PATENTSCHRIFT

(11) **EP 3 323 072 B1**
(45) Veröffentlichungstag und Bekanntmachung des Hinweises auf die Patenterteilung: **23.09.2020**
(21) Anmeldenummer: 16731171.1
(22) Anmeldetag: 23.06.2016
(51) Int. Cl.: G06F 21/33, G06F 21/64, H04L 29/06

(54) **VERFAHREN ZUM LESEN VON ATTRIBUTEN AUS EINEM ID-TOKEN, ID-TOKEN, ATTRIBUT-PROVIDER-COMPUTERSYSTEM UND COMPUTERSYSTEM**
METHOD FOR READING ATTRIBUTES FROM AN ID TOKEN, ID TOKEN, ATTRIBUTE-PROVIDER COMPUTER SYSTEM, AND COMPUTER SYSTEM
PROCÉDÉ POUR LIRE DES ATTRIBUTS DANS UN JETON ID, JETON ID, SYSTÈME INFORMATIQUE DE FOURNISSEUR D'ATTRIBUT ET SYSTÈME INFORMATIQUE

(30) Priorität: 15.07.2015 DE 102015213312
(43) Veröffentlichungstag der Anmeldung: 23.05.2018
(73) Patentinhaber: Bundesdruckerei GmbH, 10969 Berlin (DE)
(72) Erfinder: SCHOLZE, Steffen, 13469 Berlin (DE); SCHWAN, Matthias, 10437 Berlin (DE); MÜLLER, Frank, 10407 Berlin (DE); WIRTH, Klaus-Dieter, 12683 Berlin (DE); FILZHUTH, Elke, 12359 Berlin (DE)
(74) Vertreter: Richardt Patentanwälte PartG mbB
(86) Internationale Anmeldenummer: PCT/EP2016/064538
(87) Internationale Veröffentlichungsnummer: WO 2017/009019

(56) Entgegenhaltungen:
- "Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de/SharedDocs/Dow nloads/DE/BSI/Publikationen/TechnischeRich tlinien/TR03130/ [gefunden am 2016-03-10]
- "Technical Guideline eID-Server", , 15. Januar 2014 (2014-01-15), XP055256439, Gefunden im Internet: URL:https://www.bsi.bund.de/SharedDocs/Dow nloads/DE/BSI/Publikationen/TechnischeRich tlinien/TR03130/TR-03130_TR-eID-Server_Par t1.pdf?__blob=publicationFile [gefunden am 2016-07-20]
- Bsi ET AL: "Advanced Security Mechanisms for Machine Readable Travel Documents and eIDAS Token", Part 3 - Common Specifications Version 2.20, 3. Februar 2015 (2015-02-03), XP055258090, Gefunden im Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [gefunden am 2016-03-14]
- Ninjagedo: "python - What is the quickest way to hash a large arbitrary object? - Stack Overflow", , 10. April 2012 (2012-04-10), XP055286828, Gefunden im Internet: URL:http://stackoverflow.com/questions/100 97064/what-is-the-quickest-way-to-hash-a-l arge-arbitrary-object [gefunden am 2016-07-07]

## Beschreibung

Die Erfindung betrifft ein Verfahren zum Lesen von Attributen aus einem ID-Token, einen ID-Token, ein Attribut-Provider-Computersystem und ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus der Druckschrift US 2007/0294431 A1 ist ein weiteres Verfahren zur Verwaltung der digitalen Identitäten bekannt, welches ebenfalls eine Nutzerregistrierung erfordert.

Das Dokument DE 10 2008 000 067 A1 beschreibt ein Verfahren zum Lesen von zumindest einem Attribut aus einem ID-Token bekannt, von dem die vorliegende Erfindung als dem nächstkommenden Stand der Technik ausgeht. Weiterbildungen dieses Verfahrens sind in den Patentanmeldungen DE 10 2008 040 416, DE 10 2008 042 262, DE 10 2009 026 953, DE 10 2009 027 723, DE 10 2009 027 681 und DE 10 2010 028133 offenbart.

Der Erfindung liegt demgegenüber die Aufgabe zugrunde, ein verbessertes Verfahren zum Verwalten von Attributen aus einem ID-Token zu schaffen sowie einen entsprechenden ID-Token und ein Computersystem.

Die der Erfindung zugrunde liegenden Aufgaben werden jeweils mit den Merkmalen der unabhängigen Patentansprüche gelöst. Ausführungsformen der Erfindung sind Gegenstand der abhängigen Unteransprüche.

Unter einem "ID-Token" wird vorliegend insbesondere ein tragbares elektronisches Gerät verstanden, welches zumindest einen geschützten elektronischen Datenspeicher zur Speicherung der Attribute und eine Kommunikations-Schnittstelle zum Auslesen der Attribute aufweist. Der Speicherbereich ist geschützt, um zu verhindern, dass das in dem Speicherbereich gespeicherte Attribut in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, insbesondere mit RFID- und/oder NFC-Schnittstelle. Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt voll umfänglich zum Offenbarungsgehalt der vorliegenden Patentanmeldung gemacht wird, erzeugt werden.

Unter einem "ID-Provider-Computersystem" wird hier ein Computersystem verstanden, welches dazu ausgebildet ist, Attribute aus dem ID-Token eines Nutzers auszulesen und eine Attributspezifikation in den ID-Token zu schreiben. Vorzugsweise wird das ID-Provider-Computersystem in einem sogenannten Trustcenter betrieben, um ein möglichst hohes Maß an Sicherheit zu schaffen.

Unter einem "Attribut-Provider-Computersystem" wird hier ein Computersystem verstanden, welches dazu ausgebildet ist, eine Attributspezifikation aus dem ID-Token eines Nutzers auszulesen und Attribute in den ID-Token zu schreiben.

Unter einem "Attribut" werden hier insbesondere Daten verstanden, die den Nutzer des ID-Tokens oder den ID-Token selbst betreffen, insbesondere Personalisierungsdaten, wie zum Beispiel persönliche Daten des Nutzers, eine Gültigkeitsdauer oder den Herausgeber des ID-Tokens oder eine Zahlungsinformation, wie zum Beispiel Kreditkartendaten oder andere Daten für ein elektronisches Bezahlsystem.

Unter einer "Attributspezifikation" wird hier eine Beschreibung von denjenigen Attributen verstanden, die zum Beispiel von einem Dienst-Computersystem zur Erbringung eines Dienstes benötigt werden. Die Attribute können über Feldnamen von Datenfeldern identifiziert werden, in denen die jeweiligen Attributwerte gespeichert sind, und/oder über ein semantisches Netz, d.h. eine Konvention, wie Attribute systemübergreifend bezeichnet werden.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zum Bereitstellen einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Lesegerät" wird hier ein elektronisches Gerät verstanden, welches einen Lesezugriff und auch einen Schreibzugriff auf den ID-Token ermöglicht, insbesondere ein sogenanntes Chipkartenterminal. Das Lesegerät kann einen integralen Bestandteil des Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln.

Unter einer "Kommunikationsschnittstelle" wird hier eine Schnittstelle verstanden, über die Daten empfangen und gesendet werden können, wobei die Kommunikationsschnittstelle kontaktbehaftet und/oder kontaktlos ausgebildet sein kann, beispielsweise nach einem RFID- und/oder NFC-Standard.

Unter einem "Hash-Wert" wird ein Wert, insbesondere ein Prüfwert, verstanden, der aus einem Ursprungswert, beispielsweise einem Attributswert mit einem Hash-Algorithmus berechnet wurde. Die Eingangswerte können unterschiedliche Längen aufweisen. Die Hash-Werte haben üblicherweise eine feste, definierte Länge, so dass diese optimal von einer Signaturfunktion weiterverarbeitet werden können.

Ein Hash-Algorithmus ist eine Funktion, die aus einem Ursprungswert mit variabler Länge, beispielsweise einem Attributswert, einen Wert mit fester Länge, einen sogenannten Hash-Wert, berechnen kann. Ein solcher Hash-Algorithmus hat zudem folgende Eigenschaften: Die Berechnung des Ursprungswertes aus dem berechneten (Hash-)Wert soll praktisch unmöglich sein. Zudem sollen die berechneten Hash-Werte möglichst kollisionsresistent sein, das heißt, es soll praktisch unmöglich sein, verschiedene Ursprungswerte zu finden, für die der gleiche berechnete Hash-Wert ausgegeben wird.

Unter "Kombination der Hash-Werte" wird jede Möglichkeit verstanden, aus mehreren Hash-Werten einen neuen Wert zu erzeugen. Es ist nicht erforderlich, dass durch diese Kombination ein neuer Hash-Wert entsteht. Die Hash-Werte können beispielsweise kombiniert oder konkateniert werden.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Speicherbereich verstanden, auf den ein Zugriff, das heißt ein Lesezugriff und/oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein Card Verifiable Certificate (CVC).

In dem Zertifikat kann spezifiziert sein, für welches Attribut oder welche Attribute des Nutzers, die in dem geschützten Speicherbereich des ID-Tokens gespeichert sind, das ID-Provider-Computersystem bzw. das Attribut-Provider-Computersystem zur Durchführung des Lesezugriffs berechtigt ist. Ferner können auch die jeweiligen Schreibrechte für Attributspezifikationen oder Attribute in einen Zertifikat definiert sein. Ein solches Zertifikat wird auch als Berechtigungszertifikat bezeichnet.

Ein erster Aspekt der Erfindung beschreibt ein Verfahren zum Verwalten von Attributen aus einem ID-Token eines Nutzers mit folgenden Schritten:
- Senden einer Dienstanforderung des Nutzers von dem Nutzer-Computersystem über ein Netzwerk an einen Dienst-Computersystem, welches mit einem ID-Provider-Computersystem gekoppelt ist,
- Senden einer ersten Attributspezifikation von dem Dienst-Computersystem an das ID-Provider-Computersystem über das Netzwerk, wobei die erste Attributspezifikation diejenigen Attribute spezifiziert, die das Dienst-Computersystem zur Erbringung des mit der Dienstanforderung angeforderten Dienstes benötigt,
- Authentifizierung des Nutzers gegenüber dem ID-Token,
- Authentifizierung des ID-Provider-Computersystems gegenüber dem ID-Token,
- Authentifizierung des ID-Tokens gegenüber dem ID-Provider-Computersystem,
- Aufbau eines ersten gesicherten Übertragungskanals mit Ende-zu-Ende-Verschlüsselung zwischen dem ID-Token und dem ID-Provider-Computersystem über das Netzwerk,
- Durchführung eines ersten Lesezugriffs des ID-Provider-Computersystems auf den ID-Token zum Lesen der Attribute gemäß der ersten Attributspezifikation aus dem ID-Token,
- Übertragung einer in dem Speicherbereich des ID-Tokens gespeicherten ersten Teilmenge der in der ersten Attributspezifikation spezifizierten Attribute von dem ID-Token an das ID-Provider-Computersystem über den ersten gesicherten Übertragungskanal,
- Erzeugung einer zweiten Attributspezifikation einer zweiten Teilmenge der Attribute der ersten Attributspezifikation, die diejenige Attribute spezifiziert, welche in der ersten Teilmenge nicht beinhaltet sind und Übertragung der zweiten Attributspezifikation von dem ID-Provider-Computersystem an den ID-Token über den ersten gesicherten Übertragungskanal,
- Speicherung der zweiten Attributspezifikation in dem ID-Token,
- Authentifizierung eines Attribut-Provider-Computersystems gegenüber dem ID-Token,
- Authentifizierung des ID-Tokens gegenüber dem Attribut-Provider-Computersystem,
- Aufbau eines zweiten gesicherten Übertragungskanals mit Ende-zu-Ende-Verschlüsselung zwischen dem Attribut-Provider-Computersystem und dem ID-Token, wobei der erste gesicherte Übertragungskanal bestehen bleibt,
- Übertragung der zweiten Attributspezifikation von dem ID-Token über den zweiten gesicherten Übertragungskanal an das Attribut-Provider-Computersystem,
- Durchführung eines Schreibzugriffs des Attribut-Provider-Computersystems über den zweiten gesicherten Übertragungskanal zum Speichern von Attributen gemäß der zweiten Attributspezifikation in dem ID-Token,
- Durchführung eines zweiten Lesezugriffs des ID-Provider-Computersystems über den ersten gesicherten Übertragungskanal zum Lesen der von dem Attribut-Provider-Computersystem gemäß der zweiten Attributspezifikation in dem ID-Token gespeicherten Attribute,
- Ausgabe der aufgrund der Lesezugriffe von dem ID-Provider-Computersystem aus dem ID-Token ausgelesenen Attribute an das Dienst-Computersystem,
- Löschen der Attribute gemäß der zweiten Attributsspezifikation nach dem Lesezugriff.

Ausführungsformen der Erfindung sind besonders vorteilhaft, da sie die Einbeziehung eines zusätzlichen Attribut-Provider-Computersystems ermöglichen, welches Attribute liefern kann, die in dem ID-Token zunächst nicht vorhanden sind. Dies kann mit der gleichen Sicherheit und Vertrauenswürdigkeit erfolgen, wie es für die ursprünglich in dem ID-Token gespeicherten Attribute der Fall ist und auch unter Wahrung der informationellen Selbstbestimmung des Nutzers und dem Gebot der Datensparsamkeit, da keine Mitteilung der in dem ID-Token ursprünglich gespeicherten Attribute an das Attribut-Provider-Computersystem erfolgen muss. Da die nachgeladenen Attribute nach dem Lesevorgang wieder gelöscht werden, ist zudem sichergestellt, dass diese Attribute nur für den jeweiligen Lesevorgang verwendet werden. Ein unbefugtes Auslesen der nachgeladenen Attribute bei einem anschließenden zweiten Lesevorgang ist somit nicht möglich. Der Nutzer behält somit die vollständige Datenhoheit über die auf dem ID-Token gespeicherten Daten. Zudem wird verhindert, dass unnötig viele Attribute, die gegebenenfalls von anderen Anwendungen nicht benötigt werden, auf dem ID-Token gespeichert werden.

Nach einer Ausführungsform werden auf dem ID-Token die mit einem Hash-Algorithmus erzeugten Hash-Werte der Attribute gemäß der zweiten Attributspezifikation gespeichert. Die Hash-Werte werden gemeinsam mit den Attributen gelöscht. Durch die auf dem ID-Token gespeicherten Hash-Werte kann beispielsweise ein Signatur-Vorgang erleichtert werden. Durch die Speicherung der Hash-Werte wird vermieden, dass während des Sendens der Attribute zeitgleich die Hash-Werte ermittelt werden müssen, wodurch ein erhöhter Rechenaufwand entstehen würde. Durch das gemeinsame Löschen mit den Attributen ist zudem sichergestellt, dass die Hash-Werte nicht von anderen Anwendungen genutzt werden können.

Nach einer Ausführungsform werden die Hash-Werte der Attribute mit einem auf dem ID-Token gespeicherten Hash-Algorithmus erzeugt und auf dem ID-Token gespeichert werden. Es sind somit keine weiteren Dienste zur Erzeugung der Hash-Werte erforderlich. Der Nutzer behält die vollständige Hoheit über seine Daten, insbesondere über den Hash-Algorithmus bzw. die erzeugten Hash-Werte.

Nach einer Ausführungsform wird nach dem Auslesen der Attribute eine Signatur der ausgelesenen Attribute mit folgenden Schritten erzeugt:
- Senden einer Signaturanforderung vom ID-Provider-Computersystem an den ID-Token, wobei die Signaturanforderung die Attributspezifikation enthält,
- Erzeugung einer Kombination der Hash-Werte aus dem auf dem ID-Token abgespeicherten Hash-Werten der zur Attributspezifikation korrespondierenden Attributwerte durch den ID-Token,
- Erzeugung eines Gesamt-Hash-Wertes aus der Kombination der Hash-Werte durch Ausführung eines zweiten Hash-Algorithmus nach Empfang der Signaturanfrage durch den ID-Token,
- Erzeugung einer Signatur des Gesamt-Hash-Wertes mit dem privaten Schlüssel des Nutzers,
- Senden der Signatur an das ID-Provider-Computersystem, und
- Empfang der Signatur durch das ID-Provider-Computersystem.

Die Erzeugung der Signatur erfolgt also vollständig auf dem ID-Token. Dadurch ist es nicht erforderlich, den privaten Schlüssel des Nutzers oder Mittel zur Erzeugung der Hash-Werte auf einem anderen Medium, beispielsweise einem Terminal-Computersystem, zu speichern. Der Nutzer behält die vollständige Datenhoheit über seine Daten, insbesondere über seinen privaten Schlüssel.

Der Nutzer kann also eine abgeleitete Identität sowie die Signatur ohne Einschaltung eines weiteren Computersystems, beispielsweise eines ID-Provider-Computersystems, erzeugen. Insbesondere könnte der Nutzer selbst dann eine Signatur erzeugen, wenn keine Netzwerkverbindung zur Verfügung steht, so dass eine Erzeugung der Signatur autark aber ohne Einschränkung der Sicherheit erfolgen kann.

Da die Signatur vollständig auf dem ID-Token erzeugt wird, werden zudem sogenannte blinde Signaturen vermieden, bei denen die Signatur auf einem Terminal-Computersystem erzeugt. Der Nutzer behält stets die Hoheit darüber, welche Attributwerte übermittelt und signiert werden.

Da die Hash-Werte erst nach dem Senden der Attributwerte und der anschließend Signaturanfrage kombiniert werden, ist zudem der Rechen- und Programmieraufwand dadurch deutlich geringer. Sonst wäre es erforderlich, auf dem ID-Token zu protokollieren, welche Attributwerte an das Terminal-Computersystem gesendet wurden, um eine Kombination der korrespondierenden Hash-Werte erzeugen zu können.

Falls auch das zweite Attribut-Provider-Computersystem nicht sämtliche der noch fehlenden Attribute liefern kann, kann dieser Vorgang iterativ solange durchgeführt werden, bis eine Abbruchbedingung erreicht ist.

Bei der Abbruchbedingung kann es sich um Folgendes handeln:
- sämtliche der Attribute gemäß der ersten Attributspezifikation sind in dem ID-Token gespeichert,
- eine maximale Anzahl von Schreibzugriffen ist erreicht,
- eine maximale Zeitdauer seit dem Senden der Dienstanforderung wird überschritten.

In Ausführungsformen erfolgt die Authentifizierung des ID-Provider-Computersystems gegenüber dem ID-Token mithilfe eines Berechtigungszertifikats des ID-Provider-Computersystems, in dem Leserechte des ID-Provider-Computersystems zum Lesen von Attributen aus dem ID-Token spezifiziert sind, wobei der ID-Token für die Lesezugriffe des ID-Provider-Computersystems eine Prüfung der Leseberechtigung des ID-Provider-Computersystems mithilfe des Berechtigungszertifikats durchführt.

Die Authentifizierung des Attribut-Provider-Computersystems kann mithilfe eines Berechtigungszertifikats des Attribut-Provider-Computersystems erfolgen, in dem Rechte des Attribut-Provider-Computersystems zum Lesen einer Attributspezifikation aus dem ID-Token und zum Schreiben von Attributen in den ID-Token spezifiziert sind, wobei der ID-Token das Recht zum Lesen des Attribut-Provider-Computersystems vor der Übertragung einer Attributspezifikation an das Attribut-Provider-Computersystem prüft und wobei der ID-Token das Recht zum Schreiben von Attributen in den ID-Token vor dem Schreiben von Attributen durch das Attribut-Provider-Computersystem prüft.

Vor der Speicherung von Attributen in dem ID-Token aufgrund eines Schreibzugriffs können die zu schreibenden Attribute auf einem Display des ID-Tokens, des Lesegeräts oder des Nutzer-Computersystems angezeigt werden, und die zu schreibenden Attribute vorzugsweise erst nach Eingabe einer Bestätigung durch den Nutzer durch Betätigung eines Bedienelements des ID-Tokens, des Lesegeräts bzw. des Nutzer-Computersystems in den nichtflüchtigen elektronischen Speicher geschrieben werden. Durch das Schreiben der nachgeladenen Attribute im nichtflüchtigen elektronischen Speicher stehen die Attribute dauerhaft zur Verfügung, so dass diese bei einem nachfolgenden Lesevorgang für andere Anwendungen genutzt werden können.

Alternativ kann der ID-Token auch einen flüchtigen elektronischen Speicher aufweisen und die Attribute gemäß der zweiten Attributspezifikation und die zugehörigen Hash-Werte werden in dem flüchtigen Speicher gespeichert und nach Beendigung der Verbindung zwischen dem ID-Token und dem Nutzer-Computersystem gelöscht.

Unter einem "flüchtigen elektronischen Speicher" wird ein Speicher verstanden, beispielsweise ein Arbeitsspeicher, der Daten nur solange speichert wie eine Stromzufuhr vorhanden ist. Sobald die Stromzufuhr unterbrochen ist, verlieren diese Speicher ihren Inhalt. Ein flüchtiger Speicher ist beispielsweise ein Random Access Memory (RAM), ein dynamic-RAM (DRAM), ein Static-RAM (SRAM).

Die Verwendung eines flüchtigen Speichers zum Speichern der Attribute und der Hash-Werte hat den Vorteil, dass diese nur während der Durchführung des Lesevorgangs gespeichert werden und nach Beendigung des Vorgangs und einer anschließenden Unterbrechung der Stromzufuhr automatisch gelöscht werden. Ein aktives Löschen der Attribute sowie der Hash-Werte ist somit nicht erforderlich.

Alternativ kann der ID-Token auch einen flüchtigen elektronischen Speicher aufweisen und die Verweise auf die Attribute gemäß der zweiten Attributspezifikation und die zugehörigen Hash-Werte werden in dem flüchtigen Speicher gespeichert und nach Beendigung der Verbindung zwischen dem ID-Token und dem Nutzer-Computersystem gelöscht. Sobald die Verweise gelöscht sind, ist kein Zugriff mehr auf die Attribute oder die Hash-Werte möglich, so dass diese, auch wenn sie noch im nichtflüchtigen oder flüchtigen Speicher gespeichert sind, vor unbefugtem Zugriff geschützt sind. Nachfolgend können die Attribute oder Hash-Werte bei einem anschließenden Schreibvorgang überschrieben werden.

Unabhängig von der Art der Speicherung können im ID-Token Programminstruktionen gespeichert sein, die nach dem Lesezugriff, nach dem Beenden der Verbindung und/oder bei der Herstellung einer erneuten Verbindung zwischen dem ID-Token und dem Nutzer-Computersystem die Attribute gemäß der zweiten Attributspezifikation und die zugehörigen Hash-Werte löschen. Es erfolgt also ein aktives Löschen der Attribute, so dass ein unbefugtes Nutzen der Attribute für andere Anwendungen ausgeschlossen ist.

Nach dem Empfang der Attribute und der Hash-Werte kann auch eine Löschaufforderung an den ID-Token gesendet werden. Die Löschanweisung kann beispielsweise vom ID-provider-Computersystem erzeugt werden.

In einem weiteren Aspekt betrifft die Erfindung einen ID-Token, der einem Nutzer zugeordnet ist, wobei der ID-Token einen elektronischen Speicher mit einem geschützten Speicherbereich aufweist, in dem Attribute gespeichert sind, wobei ein Zugriff auf den geschützten Speicherbereich nur über einen Prozessor des ID-Tokens möglich ist, wobei der ID-Token eine Kommunikationsschnittstelle zur Kommunikation mit einem Lesegerät eines Nutzer-Computersystems aufweist, und wobei der ID-Token zur Durchführung der folgenden Schritte konfiguriert ist:
- Authentifizierung des Nutzers gegenüber dem ID-Token und optional Aufbau eines gesicherten Übertragungskanals zwischen ID-Token und Nutzer-Computersystem,
- Authentifizierung eines ID-Provider-Computersystems gegenüber dem ID-Token,
- Authentifizierung des ID-Tokens gegenüber dem ID-Provider-Computersystem,
- Aufbau eines ersten gesicherten Übertragungskanals mit Ende-zu-Ende-Verschlüsselung zwischen dem ID-Token und dem ID-Provider-Computersystem über das Netzwerk,
- Ermöglichung eines ersten Lesezugriffs des ID-Provider-Computersystems auf den ID-Token zum Lesen der Attribute gemäß einer ersten Attributspezifikation aus dem ID-Token,
- Senden einer in dem Speicherbereich des ID-Tokens gespeicherten ersten Teilmenge der in der ersten Attributspezifikation spezifizierten Attribute von dem ID-Token an das ID-Provider-Computersystem über den ersten gesicherten Übertragungskanal,
- Empfang einer zweiten Attributspezifikation von dem ID-Provider-Computersystem durch den ID-Token über den ersten gesicherten Übertragungskanal,
- Speicherung der zweiten Attributspezifikation in dem ID-Token,
- Authentifizierung eines Attribut-Provider-Computersystems gegenüber dem ID-Token,
- Authentifizierung des ID-Tokens gegenüber dem Attribute-Provider-Computersystem,
- Aufbau eines zweiten gesicherten Übertragungskanals mit Ende-zu-Ende-Verschlüsselung zwischen dem Attribut-Provider-Computersystem und dem ID-Token, wobei der erste gesicherte Übertragungskanal bestehen bleibt,
- Übertragung der zweiten Attributspezifikation von dem ID-Token über den zweiten gesicherten Übertragungskanal an das Attribut-Provider-Computersystem,
- Ermöglichung eines Schreibzugriffs des Attribut-Provider-Computersystems über den zweiten gesicherten Übertragungskanal zum Speichern von Attributen gemäß der zweiten Attributspezifikation in dem ID-Token,
- Ermöglichung eines zweiten Lesezugriffs des ID-Provider-Computersystems über den ersten gesicherten Übertragungskanal zum Lesen der von dem Attribut-Provider-Computersystem gemäß der zweiten Attributspezifikation in dem ID-Token gespeicherten Attribute
- Löschen der Attribute gemäß der zweiten Attributsspezifikation nach dem Lesezugriff.

Die Kommunikationsschnittstelle des ID-Token kann zur drahtlosen Kommunikation und zum drahtlosen Einkoppeln von Energie in den ID-Token durch das Lesegerät ausgebildet sein, um den ID-Token mit der für seinen Betrieb erforderlichen elektrischen Energie zu versorgen, wobei der ID-Token einen flüchtigen elektronischen Speicher aufweist, und der ID-Token so konfiguriert ist, dass die zweite Attributspezifikation in dem flüchtigen elektronischen Speicher gespeichert wird, sodass die zweite Attributspezifikation aus dem flüchtigen elektronischen Speicher gelöscht wird, wenn der ID-Token aus der Reichweite des Lesegeräts entfernt wird, und wobei die aufgrund des Schreibzugriffs des Attribut-Provider-Computersystems in dem ID-Token gespeicherten Attribute in dem nichtflüchtigen elektronischen Speicher gespeichert werden, sodass auf diese durch einen nachfolgenden weiteren ersten Lesezugriff aufgrund einer weiteren Dienstanforderung zugegriffen werden kann.

In einem weiteren Aspekt betrifft die Erfindung ein Attribut-Provider-Computersystem mit einer Netzwerk-Schnittstelle zum Zugriff auf einen ID-Token über ein Netzwerk, wobei das Attribut-Provider-Computersystem zur Durchführung der folgenden Schritte konfiguriert ist:
- Lesen einer Attributspezifikation aus dem ID-Token durch einen Netzwerkzugriff über einen gesicherten Übertragungskanal,
- Durchführung eines Datenbankzugriffs um Attribute gemäß der Attributspezifikation aus einer Datenbank zu lesen,
- Durchführung eines Schreibzugriffs über den gesicherten Übertragungskanal auf den ID-Token, um die aus der Datenbank gelesenen Attribute in den ID-Token zu schreiben,
- für den Fall, dass nicht sämtliche Attribute gemäß der Attributspezifikation aus der Datenbank auslesbar sind, Erzeugung einer weiteren Attributspezifikation, die diejenigen Attribute der Attributspezifikation spezifiziert, die in den aufgrund des Schreibzugriffs in den ID-Token geschriebenen Attributen nicht beinhaltet sind,
- Speicherung der weiteren Attributspezifikation in dem ID-Token um die vorherige Attributspezifikation zu ersetzen.

Das Attribut-Provider-Computersystem kann ein Berechtigungszertifikat zur Authentifizierung gegenüber dem ID-Token aufweisen, wobei in dem Berechtigungszertifikat Rechte des Attribut-Provider-Computersystems zum Lesen der Attributspezifikation aus dem ID-Token und zum Schreiben von Attributen in den ID-Token spezifiziert sind.

In einem weiteren Aspekt betrifft die Erfindung ein Computersystem mit einem erfindungsgemäßen ID-Token und mit einem ID-Provider-Computersystem, wobei das ID-Provider-Computersystem dazu konfiguriert ist, zum Lesen von Attributen aus dem ID-Token gemäß der ersten Attributspezifikation mehrfach hintereinander über denselben ersten gesicherten Übertragungskanal Attribute aus dem ID-Token auszulesen.

Das Computersystem weist beispielsweise zumindest ein erfindungsgemäßes Attribut-Provider-Computersystem auf.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Computersystems,
- Figur 2: ein Flussdiagramm einer Ausführungsform eines erfindungsgemäßen Verfahrens,
- Figur 3: ein Ablauf-Diagramm einer Ausführungsform eines erfindungsgemäßen Verfahrens,
- Figur 4: ein Flussdiagramm einer Ausführungsform eines erfindungsgemäßen Verfahrens mit zumindest einem weiteren Attribut-Provider-Computersystem,
- Figur 5: ein Flussdiagramm einer weiteren Ausführungsform eines erfindungsgemäßen Verfahrens,
- Figur 6: ein Ablauf-Diagramm einer weiteren Ausführungsform eines erfindungsgemäßen Verfahrens.

Elemente der nachfolgenden Ausführungsformen, die einander gleichen oder einander entsprechen, sind jeweils mit identischen Bezugszeichen gekennzeichnet.

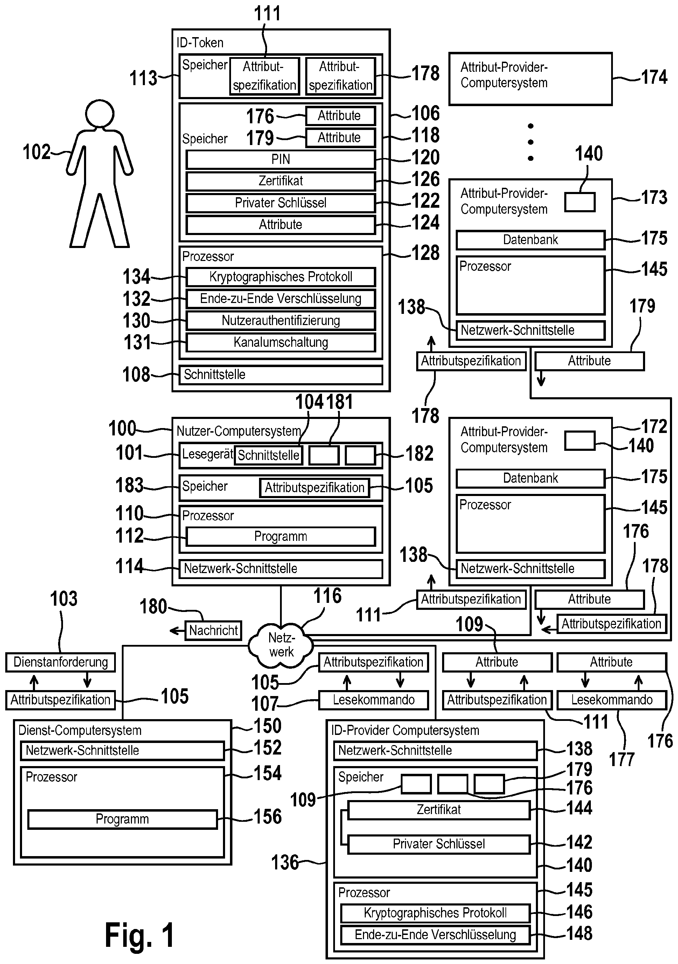

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat ein Lesegerät 101 mit einer Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann. Die Authentifizierung des Nutzers mittels PIN erfolgt vorzugsweise indirekt z.B. mittels des PACE-Verfahrens wie durch die ICAO in TR-SAC beschrieben.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung ein, beispielsweise in das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert. Dies kann indirekt z.B. mittels des PACE-Verfahrens oder durch direkten Vergleich der Werte auf dem ID-Token erfolgen.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren (EAC) implementiert, wie es in Version 1 für maschinenlesbare Reisedokumente (machine-readable travel documents - MRTD) von der Internationalen ZivilLuftfahrtorganisation (ICAO) spezifiziert ist und in Version 2 durch das Bundesamt für Sicherheit in der Informationstechnik für deutsche hoheitliche Dokumente beschrieben. In beiden Versionen wird dabei jeweils eine Authentisierung des Lesegerätes (Terminal) gegenüber dem ID-Token durch Tercinal Authentikation (TA) und eine Authentisierung des ID-Tokens (Chip) mittels Chip Authentication (CA) durchgeführt, aus der sich ein gesicherter Kanal ableitet, um Daten Ende-zu-Ende-verschlüsselt zu übertragen. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Nutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten oder als Behördenserver für eine eGovernment Anwendung.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall können für die Erbringung des Dienstes weitere Attribute erforderlich sein, die in dem ID-Token zunächst nicht vorhanden sind. Hierzu kann das in der Figur 1 gezeigte Computersystem ein oder mehrere Attribut-Provider-Computersysteme 172, 173, 174, ... aufweisen. Diese können prinzipiell gleich aufgebaut sein wie das ID-Provider-Computersystem und verfügen über zusätzliche Funktionalitäten zum Lesen oder Generieren von Attributen sowie zum Schreiben von Attributen und erforderlichenfalls Attributspezifikationen in den ID-Token.

Zur Inanspruchnahme eines von dem Dienst-Computersystem 150 zur Verfügung gestellten Dienstes wird beispielsweise wie folgt vorgegangen:
a) Der Nutzer 102 baut mithilfe seines Nutzer-Computersystems 100 eine Internetsession über das Netzwerk 116 zu dem Dienst-Computersystem 150 auf. Über diese Internetsession wird eine Dienstanforderung 103 von dem Nutzer-Computersystem 100 an das Dienst-Computersystem 150 übertragen, womit der Nutzer 102 die Erbringung eines Dienstes des Dienst-Computersystems 150 anfordert. Das Dienst-Computersystem 150 antwortet auf diese Dienstanforderung 103 mit einer ersten Attributspezifikation 105, die diejenigen Attribute spezifiziert, die für die Erbringung des mit der Dienstanforderung 103 angeforderten Dienstes zu erfüllen sind. Diese erste Attributspezifikation spezifiziert beispielsweise eine Anzahl von M Attributen A₁, A₂, A₃, ... A_{M}.
b) Beispielsweise wird die Attributspezifikation 105 in einem Speicher 183 des Nutzer-Computersystems 100 zwischengespeichert. Aufgrund des Empfangs der Attributspezifikation 105 durch das Nutzer-Computersystem 100 wird der Nutzer 102 dazu aufgefordert, sich gegenüber dem ID-Token 106 zu authentifizieren. Hierzu gibt der Nutzer 102 seine PIN zum Beispiel über das Lesegerät 101 oder eine Tastatur des Nutzer-Computersystems 100 ein. Ferner baut das Nutzer-Computersystem 100 zu dem ID-Provider-Computersystem 136 eine weitere Internetsession über das Netzwerk 116 auf, über die sich das ID-Provider-Computersystem 136 gegenüber dem Nutzer-Computersystem 100 authentifiziert, und zwar unter Verwendung des Zertifikats 144.
   Vorzugsweise erfolgt eine gegenseitige Authentifizierung des IT-Tokens 106 und des ID-Provider-Computersystems 136 bzw. des jeweiligen Attribut-Provider-Computersystems vorzugsweise unter Verwendung der Zertifikate 126 und 144 und mittels EAC. Hierbei wird auch ein Session Key vereinbart, mit dem der erste gesicherte Übertragungskanal mit Ende-zu-Ende-Verschlüsselung zwischen dem ID-Token 106 und dem ID-Provider-Computersystem über das Nutzer-Computersystem 100 und das Netzwerk 116 aufgebaut wird. Ferner leitet das Nutzer-Computersystem 100 die Attributspezifikation 105 über die mit dem ID-Provider-Computersystem 136 bestehende Session an das ID-Provider-Computersystem 136 weiter.
c) Das ID-Provider-Computersystem 136 antwortet auf die erste Attributspezifikation 105 mit einem Lesekommando 107 zum Lesen der in der ersten Attributspezifikation spezifizierten Attribute. Dieses Lesekommando 107 wird über den ersten gesicherten Übertragungskanal mit Ende-zu-Ende-Verschlüsselung von dem ID-Provider-Computersystem 136 an den ID-Token 106 übertragen. Der Prozessor 128 greift daraufhin auf den elektronischen Speicher 118 zu, um die Attribute gemäß der ersten Attributspezifikation 105 auszulesen. Im Weiteren wird ohne Beschränkung der Allgemeinheit davon ausgegangen, dass von den P Attributen gemäß der ersten Attributspezifikation 105 nur M Attribute A₁, A₂, A₃, ..., A_{M} vorhanden sind, wobei M < P. Auf das Lesekommando 107 antwortet der ID-Token 106 mit der Antwort 109, die die erste Teilmenge der in der ersten Attributspezifikation 105 spezifizierten Attribute, nämlich die Attribute A₁, A₂, A₃, ..., A_{M} beinhaltet. Die Antwort 109 wird über den ersten gesicherten Übertragungskanal von dem ID-Token 106 an das ID-Provider-Computersystem 136 übertragen.
d) Das ID-Provider-Computersystem 136 speichert die Antwort 109 mit der ersten Teilmenge der Attribute in seinem Speicher 140 und erzeugt eine zweite Attributspezifikation 111, welche die noch fehlenden Attribute spezifiziert, das heißt diejenigen der ersten Attributspezifikation 105 spezifizierten Attribute, die in der Antwort 109 nicht beinhaltet sind, das heißt hier die Attribute A_{P+1} bis A_{M}. Die zweite Attributspezifikation 111 wird über den ersten gesicherten Übertragungskanal von dem ID-Provider-Computersystem 136 zu dem ID-Token 106 übertragen und dort gespeichert und kann bei Speicherung in dem nicht-flüchtigen oder flüchtigen Speicher eine bereits vorhandene Attributspezifikation ersetzen. Die Speicherung kann beispielsweise in einem flüchtigen Speicher 113 des IT-Tokens 106 erfolgen.
e) Das Nutzer-Computersystem 100 baut eine weitere Internetsession über das Netzwerk 116 mit dem Attribut-Provider-Computersystem 172 auf. Das Attribut-Provider-Computersystem 172 authentifiziert sich dann gegenüber dem ID-Token 106, wobei vorzugsweise EAC mit gegenseitiger Authentifizierung durchgeführt wird. Hierbei wird ein zweiter gesicherter Übertragungskanal mit Ende-zu-Ende-Verschlüsselung mit einem Session Key zwischen dem ID-Token 106 und dem Attribut-Provider-Computersystem 172 über das Netzwerk 116 und das Nutzer-Computersystem 100 aufgebaut, wobei der erste gesicherte Übertragungskanal bestehen bleibt.
   Der Prozessor 128 dient zur Ausführung von Programminstruktionen 131 für die Kanalumschaltung, das heißt die Auswahl einer der gesicherten Übertragungskanäle, das heißt hier des ersten oder des zweiten gesicherten Übertragungskanals, für die externe Kommunikation. Aufgrund des Aufbaus des zweiten gesicherten Übertragungskanals wird durch Ausführung der Programminstruktionen 131 der zweite gesicherte Übertragungskanal von dem Prozessor 128 ausgewählt, über den der ID-Token 106 dann die zweite Attributspezifikation 111 an das Attribut-Provider-Computersystem 172 sendet.
f) Das Attribut-Provider-Computersystem 172 führt daraufhin einen Zugriff auf seine Datenbank 175 durch, um die Attribute gemäß der zweiten Attributspezifikation 111 zu lesen. Das Attribut-Provider-Computersystem 172 antwortet dann auf die Attributspezifikation 111 mit seiner Antwort 176, die die aus der Datenbank 175 gelesenen Attribute beinhaltet und sendet diese Antwort 176 über den zweiten gesicherten Übertragungskanal an den ID-Token 106, welcher die Antwort 176 mit diese Attributen mit seinem elektronischen Speicher 118 speichert.
g) Durch Ausführung der Programminstruktionen 131 schaltet der ID-Token 106 dann auf den ersten gesicherten Übertragungskanal zurück. Das ID-Provider-Computersystem 136 greift dann durch ein zweites Lesekommando 177 über den ersten gesicherten Übertragungskanal auf den ID-Token 106 zu und erhält als Antwort darauf von dem ID-Token 106 die Antwort 176 aus dem Speicher 118 mit den noch fehlenden Attributen.

Für den Fall, dass das Attribut-Provider-Computersystem 172 nicht auf sämtliche gemäß der zweiten Attributspezifikation 111 erforderlichen Attribute zugreifen kann, beispielsweise weil diese nicht sämtlich in der Datenbank 175 gespeichert sind, kann der oben genannte Vorgang iterativ unter Verwendung der weiteren Attribut-Provider-Computersysteme 173, 174, ... durchgeführt werden, und zwar so lange, bis sämtliche der Attribute gemäß der ersten Attributspezifikation 105 in dem Speicher 118 vorliegen oder eine andere Abbruchbedingung erreicht ist.

Falls das Attribut-Provider-Computersystem 172 nicht sämtliche der Attribute gemäß der zweiten Attributspezifikation 111 ermitteln kann, so generiert das Attribut-Provider-Computersystem 172 eine dritte Attributspezifikation 178. Wenn beispielsweise die Antwort 176 die Attribute A_{P+1} bis A_{Q} beinhaltet mit Q < M, so werden in der dritten Attributspezifikation 178 die noch fehlenden Attribute A_{Q+1} bis A_{M} spezifiziert. Diese dritte Attributspezifikation 178 wird von dem Attribut-Provider-Computersystem 172 über den zweiten gesicherten Übertragungskanal zu dem ID-Token 106 übertragen und ersetzt oder aktualisiert die in dem Speicher 113 gespeicherte zweite Attributspezifikation 111.

Anschließend wird dann vorzugsweise nach vorherigem EAC ein dritter gesicherter Übertragungskanal zu dem Attribut-Provider-Computersystem 173 aufgebaut, welches die dritte Attributspezifikation 178 aus dem ID-Token 106 ausliest und darauf mit einer Antwort 179 antwortet, die die noch fehlenden Attribute gemäß der dritten Attributspezifikation 178 beinhaltet. Diese Antwort 179 wird über den dritten gesicherten Übertragungskanal von dem Attribut-Provider-Computersystem 173 an den ID-Token 106 übertragen und in dem Speicher 118 gespeichert.

Durch Ausführung der Programminstruktionen 131 wird dann wiederum auf den ersten gesicherten Übertragungskanal zurückgeschaltet, sodass aufgrund des zweiten Lesekommandos 177 in diesem Fall sowohl die Antwort 176 als auch die Antwort 179, die insgesamt die Attribute A_{P+1} bis A_{M} beinhalten, an das ID-Provider-Computersystem 136 übertragen werden.

Falls seitens des Attribut-Provider-Computersystems 173 nicht sämtliche der Attribute gemäß der dritten Attributspezifikation 178 verfügbar sind, kann in analoger Art und Weise iterativ weiterverfahren werden, indem ein oder mehrere weitere Attribut-Provider-Computersysteme, wie zum Beispiel das Attribut-Provider-Computersystem 174, in den Ablauf eingebunden werden.

Das ID-Provider-Computersystem 136 verfügt nach einer erfolgreichen Durchführung der oben genannten Verfahrensschritte in seinem Speicher 140 über sämtliche der Attribute, die mit der ersten Attributspezifikation 105 angefordert worden sind. Das ID-Provider-Computersystem 136 generiert daraufhin eine Nachricht 180, die diese Attribute A₁ bis A_{M} beinhaltet, signiert diese Nachricht und sendet sie über das Netzwerk 116 an das Dienst-Computersystem 150, wobei dies über das Nutzer-Computersystem 100 erfolgen kann. Das Dienst-Computersystem 150 kann dann gegebenenfalls mithilfe der in der Nachricht 180 beinhalteten Attribute den mit der Dienstanforderung 103 angeforderten Dienst erbringen.

Die Attribut-Provider-Computersysteme 172, 173, 174 ... können analog zu dem ID-Provider-Computersystem 136 aufgebaut sein, das heißt sie verfügen jeweils über eine Netzwerk-Schnittstelle 138, einen Prozessor 145 zur Ausführung von Programminstruktionen 146, 148 und einen Speicher 140, in dem ein Zertifikat und ein privater Schlüssel gespeichert sind. Bei dem Zertifikat handelt es sich vorzugsweise um ein Berechtigungszertifikat, in dem jeweils eine Berechtigung für Lese- und Schreibzugriffe auf den ID-Token 106 spezifiziert ist.

Nach einer Ausführungsform der Erfindung werden die in der Antwort 176 bzw. 179 beinhalteten Attribute erst dann in dem Speicher 118 gespeichert, nachdem diese der Nutzer 102 zur Kenntnis nehmen konnte. Hierzu werden diese Attribute auf einem Display 181 angezeigt, welches zum Beispiel zu dem Lesegerät 101 gehört. Ferner kann beispielsweise auf dem Lesegerät 101 ein Bedienelement 182 vorhanden sein, über welches der Nutzer 102 eine Eingabe tätigen muss, um die Speicherung der in den Antworten 176 bzw. 179 beinhalteten Attribute in dem Speicher 118 zu genehmigen. Hierdurch erhält der Nutzer 102 eine Kontrollmöglichkeit bezüglich der möglicherweise seine Person betreffenden zusätzlichen Attribute in dem Speicher 118.

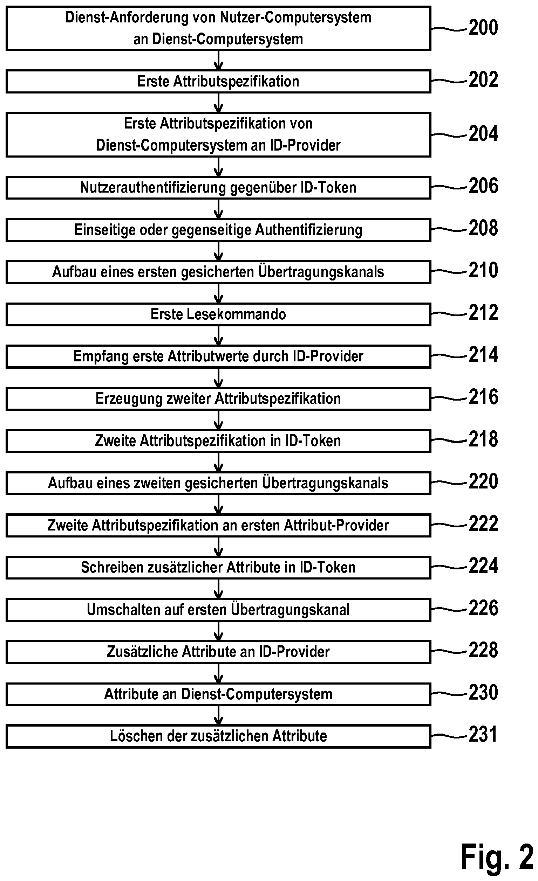

Die Figur 2 zeigt eine Ausführungsform eines entsprechenden erfindungsgemäßen Verfahrens. In dem Schritt 200 wird eine Dienstanforderung 103 von dem Nutzer-Computersystem 100 an das Dienst-Computersystem 150 gesendet. Das Dienst-Computersystem 105 erzeugt daraufhin eine Antwort mit der ersten Attributspezifikation 105 (Schritt 202), die in dem Schritt 204 an das ID-Provider-Computersystem 136 gesendet wird.

In dem Schritt 206 authentifiziert sich der Nutzer 102 gegenüber dem ID-Token 106 und es erfolgt in dem Schritt 208 eine einseitige oder gegenseitige Authentifizierung des ID-Tokens 106 und des ID-Provider-Computersystems 136, insbesondere mittels EAC.

In dem Schritt 210 wird die erste gesicherte Verbindung aufgebaut, über welche das ID-Provider-Computersystem in dem Schritt 212 das erste Lesekommando 107 sendet. Auf das erste Lesekommando antwortet der ID-Token 106 in dem Schritt 214 mit den in der Antwort 109 beinhalteten Attributen A₁ bis A_{P}.

Daraufhin erzeugt das ID-Provider-Computersystem 136 in dem Schritt 216 die zweite Attributspezifikation 111, in der die noch fehlenden Attribute A_{P+1} bis A_{M} spezifiziert sind und schreibt diese zweite Attributspezifikation 111 in dem Schritt 218 über den ersten gesicherten Übertragungskanal in den ID-Token 106, wo die Attributspezifikation 111 gespeichert wird.

Anschließend wird dann in dem Schritt 220 der zweite gesicherte Übertragungskanal zu dem Attribut-Provider-Computersystem 172 aufgebaut und die zweite Attributspezifikation 111 aus dem ID-Token 106 gelesen und zu dem Attribut-Provider-Computersystem 172 übertragen.

Das Attribut-Provider-Computersystem 172 greift dann auf die laut zweiter Attributspezifikation 111 angeforderten Attribute zu, beispielsweise über einen Datenbankzugriff, und schreibt diese zusätzlichen Attribute, in dem betrachteten Beispielsfall die Attribute A_{P+1} bis A_{M} in dem Schritt 224 über den zweiten gesicherten Übertragungskanal in den ID-Token 106.

Der ID-Token 106 schaltet dann auf den ersten gesicherten Übertragungskanal in dem Schritt 226 zurück, sodass die zuvor in dem Schritt 224 zusätzlich in den ID-Token 106 geschriebenen Attribute von dem ID-Provider-Computersystem 136 über diesen ersten gesicherten Übertragungskanal aus dem ID-Token 106 ausgelesen werden (Schritt 228). In dem Schritt 230 überträgt das ID-Provider-Computersystem 136 dann sämtliche der aus dem ID-Token 106 gelesenen Attribute an das Dienst-Computersystem 150, sodass dieses dann gegebenenfalls nach Prüfung der Attribute den angeforderten Dienst erbringen kann.

Abschließend werden die Attribute gemäß der zweiten Attributspezifikation 111 auf dem ID-Token gelöscht, so dass diese vor einem weiteren Auslesen während eines weiteren nachfolgenden Lesevorgangs geschützt sind.

Das Löschen der Attribute gemäß der zweiten Attributspezifikation 111 kann auf verschiedene Weise erfolgen.

In einer ersten Ausführungsform sind die Attribute im nichtflüchtigen Speicher 113 des ID-Tokens gespeichert, so dass diese auch nach Beendigung der Stromzufuhr gespeichert bleiben und somit für weitere Anwendungen zur Verfügung stehen würden.

In dieser Ausführungsform erfolgt vorzugsweise ein aktives Löschen der Attribute. Im Speicher des ID-Token können beispielsweise Programminstruktionen abgespeichert sein, die zu Beginn eines Verbindungsaufbaus und der Stromzufuhr einen Löschvorgang initiieren. Bei dieser Ausführungsform stehen die Attribute für die aktuelle Verbindung uneingeschränkt zur Verfügung, werden aber gelöscht, bevor ein weiterer Lesevorgang während eines erneuten Verbindungsaufbaus erfolgt.

Alternativ kann der Löschvorgang nach Beendigung des Lesevorgangs bzw. nach der Übertragung der Attribute an das Dienst-Computersystem durch ein Löschkommando initiiert werden, wobei das Löschkommando beispielsweise vom ID-Provider-Computersystem oder vom Dienst-Computersystem erzeugt und an den ID-Token gesendet werden kann.

In einer weiteren Ausführungsform hat der ID-Token einen flüchtigen Speicher, der bei einer Unterbrechung der Stromzufuhr, beispielsweise durch eine Beendigung der Verbindung, gelöscht wird.

Die Attribute gemäß der zweiten Attributspezifikation 111 werden vorzugswiese im nichtflüchtigen Speicher abgelegt und durch das Beendigen der Verbindung ohne weiteres Löschkommando gelöscht.

Alternativ oder ergänzend können auch die Verweise auf die Attribute gemäß der zweiten Attributspezifikation 111 im flüchtigen Speicher gespeichert werden. Durch die Unterbrechung der Stromzufuhr werden diese Verweise gelöscht, so dass ein Zugriff auf die gespeicherten Attribute nicht mehr möglich ist.

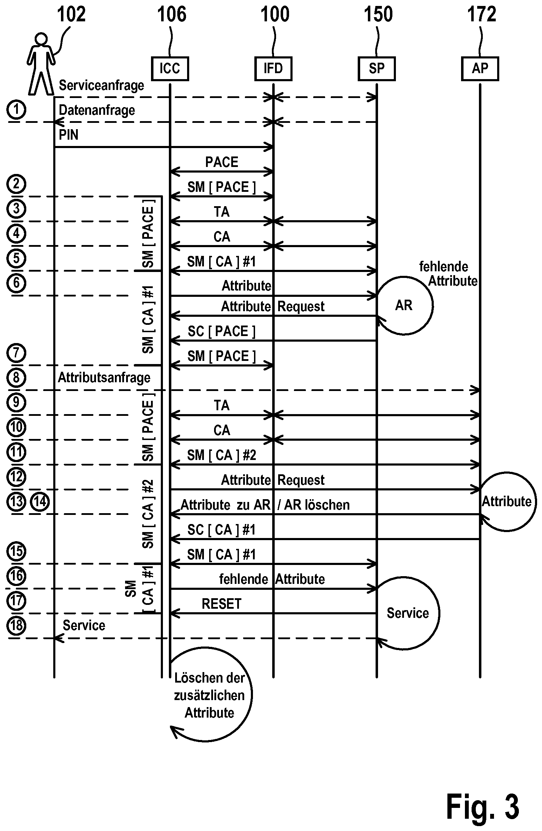

Die Figur 3 zeigt ein entsprechendes Ablauf-Diagramm, wobei hier davon ausgegangen wird, dass das Dienst-Computersystem 150 das ID-Provider-Computersystem 136 beinhaltet.

In dem Schritt 1 wird durch den Nutzer 102 eine Serviceanfrage, das heißt eine Dienstanforderung 103, an das Dienst-Computersystem 150 gesendet, und zwar mithilfe des Nutzer-Computersystems 100. Das Dienst-Computersystem 150 antwortet darauf mit einer Datenanfrage, das heißt mit der ersten Attributspezifikation 105.

Daraufhin authentifiziert sich der Nutzer 102 gegenüber dem ID-Token 106, indem er seine PIN in das Nutzer-Computersystem 100, das heißt beispielsweise dessen Lesegerät 101, eingibt. Aufgrund der Ausführung beispielsweise des PACE-Protokolls wird die PIN verifiziert und in dem Schritt 2 wird mithilfe von PACE ein Secure Messaging-Kanal zwischen ID-Token und Nutzer-Computersystem, das heißt SM-[PACE], aufgebaut.

In dem Schritt 3 erfolgt dann auf dieser Basis eine TA des in dem Dienst-Computersystem 150 beinhalteten ID-Provider-Computersystems sowie in dem Schritt 4 eine CA des ID-Tokens 106 gegenüber dem ID-Provider-Computersystem.

In dem Schritt 5 wird dann der erste gesicherte Übertragungskanal zwischen dem ID-Token 106 und dem ID-Provider-Computersystem aufgebaut, nämlich SM-[CA]#1.

Die weitere Kommunikation in dem Schritt 6 verläuft dann über diesen ersten gesicherten Übertragungskanal, nämlich das Auslesen von Attributen aus dem ID-Token 106 gemäß der ersten Attributspezifikation 105 und das anschließende Schreiben der zweiten Attributspezifikation 111, d.h. ein Attribute Request (AR). Ferner kann durch das ID-Provider-Computersystem 136 ein Umschaltsignal (Select Channel - SC) SC-[PACE] wieder hergestellt werden, welches einerseits durch die Programminstruktionen 131 seitens des ID-Tokens 106 verarbeitet wird und andererseits durch das Nutzer-Computersystem 100 verarbeitet wird, um den Übertragungskanal (Secure Messaging - SM) SM-[PACE] zwischen ID-Token und Nutzer-Computersystem zurückzuschalten.

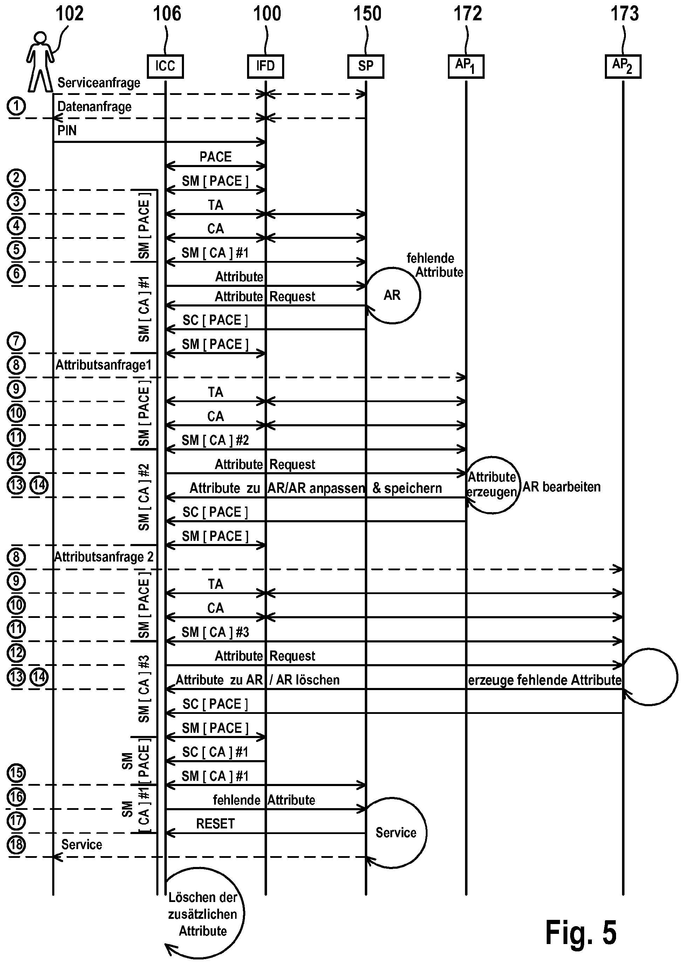

In dem Schritt 8 kann optional eine Auswahl des Attribut-Provider-Systems 172 durch den Nutzer 102 erfolgen. Auf eine solche explizite Auswahl kann auch verzichtet werden, wenn das Nutzer-Computersystem 100 das zu kontaktierende Attribut-Provider-Computersystem bereits kennt, beispielsweise wenn der Nutzer 102 vorab mit der Lieferung von Attributen durch das Attribut-Provider-Computersystem 172 sein Einverständnis erklärt hat. Entsprechendes gilt für die Attributsanfrage 2 gemäß Fig. 5.

Die Schritte 9 und 10 werden dann analog zu den Schritten 3 und 4 auf der Basis von SM-[PACE] durchgeführt, und zwar für eine TA des Attribut-Provider-Computersystems 172 bzw. eine CA des ID-Tokens 106 gegenüber dem Attribut-Provider-Computersystem 172.

In dem Schritt 10 wird dann der zweite gesicherte Übertragungskanal SM-[CA] #2 aufgebaut, über den dann die weitere Kommunikation in den Schritten 12, 13 und 14 erfolgt:
In dem Schritt 12 liest das Attribut-Provider-Computersystem 172 die zweite Attributspezifikation 111 und liest dann die entsprechenden Attribute, beispielsweise durch einen Zugriff auf seine Datenbank 175. Das Attribut-Provider-Computersystem 172 schreibt dann diese zusätzlichen Attribute in den ID-Token 106 (Schritt 13) und löscht die dort gespeicherte zweite Attributspezifikation 111 (Schritt 14).

Ferner kann das Attribut-Provider-Computersystem 172 ein Umschaltsignal generieren, nämlich SC-[CA] #1, welches von den Programminstruktionen 131 verarbeitet wird, um den Übertragungskanal auf den ersten gesicherten Übertragungskanal SM-[CA] #1 in dem Schritt 15 zurückzuschalten. Alternativ kann das Attribut-Provider-Computersystem 172 ein Umschaltsignal generieren, nämlich SC-[PACE], welches von den Programminstruktionen 131 verarbeitet wird, um zunächst den Übertragungskanal SM[PACE] zwischen ID-Token und Nutzer-Computersystem zurückzuschalten. Das Nutzer-Computersystem kann dann ein Umschaltsignal generieren, nämlich SC-[CA] #1, welches von den Programminstruktionen 131 verarbeitet wird, um den Übertragungskanal auf den ersten gesicherten Übertragungskanal SM-[CA] #1 in dem Schritt 15 zurückzuschalten.

Über diesen ersten gesicherten Übertragungskanal liest dann das ID-Provider-Computersystem in dem Schritt 16 die noch fehlenden Attribute, die in dem Schritt 13 von dem Attribut-Provider-Computersystem geschrieben worden sind und sendet optional in dem Schritt 17 ein Reset-Kommando, um hiermit den Vorgang des Lesens von Attributen aus dem ID-Token abzuschließen. In dem Schritt 18 kann dann das Dienst-Computersystem 150 mittels der zuvor aus dem ID-Token 106 gelesenen Attribute den gewünschten Dienst erbringen.

Abschließend werden die Attribute gemäß der zweiten Attributspezifikation 111 auf dem ID-Token gelöscht (Schritt 19).

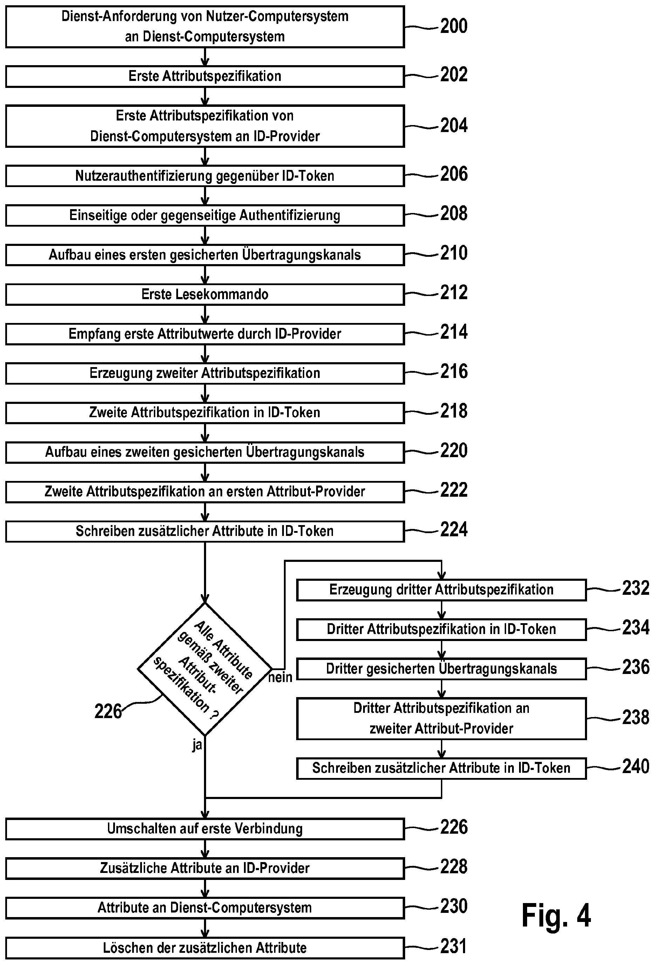

Die Figur 4 zeigt eine weitere Ausführungsform eines erfindungsgemäßen Verfahrens. Die Schritte 200 bis 224 des Verfahrens gemäß Figur 4 können identisch sein zu den entsprechenden Schritten der Ausführungsform gemäß Figur 2, wobei in dem Schritt 224 nicht in jedem Fall sämtliche Attribute bereits in dem ID-Token 106 vorhanden sind.

Hierzu wird in dem Schritt 226 geprüft, ob sämtliche Attribute gemäß der zweiten Attributspezifikation 111 in dem Schritt 224 geschrieben werden konnten. Ist dies nicht der Fall, so geht die Ablaufsteuerung zu dem Schritt 232, in dem die dritte Attributspezifikation 178 erzeugt wird, um diese in dem Schritt 234 an den ID-Token 106 zu übertragen.

Dann wird in dem Schritt 236 der dritte gesicherte Übertragungskanal aufgebaut, um die dritte Attributspezifikation 178 in dem Schritt 238 an ein zweites Attribut-Provider-Computersystem, beispielsweise das Attribut-Provider-Computersystem 173, zu übertragen, welches daraufhin in dem Schritt 240 mit seiner Antwort 179 die angeforderten zusätzlichen Attribute in den ID-Token 106 schreibt.

Anschließend werden die Schritte 226 bis 231 so wie in der Ausführungsform gemäß Figur 2 ausgeführt.

Die Figur 5 zeigt ein entsprechendes Ablauf-Diagramm. Im Unterschied zu dem Ablauf-Diagramm gemäß Figur 3 können in dem Schritt 13 nicht sämtlich der erforderlichen Attribute von dem Attribut-Provider-Computersystem 172 gemäß der zweiten Attributspezifikation 111 geliefert werden.

Das Attribut-Provider-Computersystem passt daraufhin die zweite Attributspezifikationen 111, das heißt den Attribute Request, dementsprechend an, indem es die dritte Attributspezifikation 178 erzeugt und in den ID-Token 106 schreibt. Im Unterschied zu der Ausführungsform gemäß Figur 3 wird ferner von dem Attribut-Provider-Computersystem ein Umschaltsignal SC-[PACE] erzeugt, um den Übertragungskanal SM-[PACE] zwischen ID-Token und Nutzer-Computersystem zurückzuschalten.

Auf dieser Basis werden dann die Schritte 8 bis 14 erneut in analoger Art und Weise mit Bezug auf das zweite Attribut-Provider-Computersystem 173 ausgeführt. Anschließend erzeugt das Nutzer-Computersystem 100 ein Umschaltsignal SC [CA] #1, sodass der ID-Token 106 auf den ersten gesicherten Übertragungskanal SM [CA] #1 zurückschaltet.

Abschließend werden die Attribute gemäß der zweiten Attributspezifikation 111 auf dem ID-Token gelöscht.

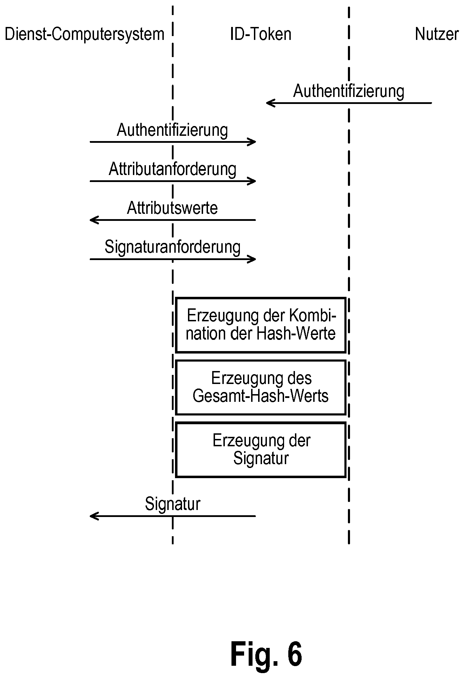

In Figur 6 ist ein Verfahren Erzeugung einer elektronischen Signatur mit dem in Figur 1 beschriebenen Conmputersystem gezeigt.

Zur Durchführung des Verfahrens weist der ID-Token 106 vorzugsweise einen weiteren Speicherbereich zur Speicherung von Hash-Werten auf, die aus den Attributswerten mit einem ebenfalls im ID-Token gespeicherten Hash-Algorithmus erzeugt werden. Die Hash-Werte sind derart im Speicherbereich gespeichert, dass eine eindeutige Zuordnung der Hash-Werte zu den Attributswerten möglich ist.

Beispielsweise weisen sowohl der Speicherbereich 124 wie auch der Speicherbereich für die Hash-Werte die gleiche Verzeichnisstruktur auf. Die Speicherbereiche weisen beispielsweise eine Verzeichnisstruktur mit einem Masterfile (MF) sowie mehreren Dedicated Files (DF) bzw. Elementary Files (EF) auf.

Um eine eindeutige Zuordnung der Hash-Werte zu den Attributswerten sicherzustellen, können die Hash-Werte und die Attributswerte eine Indizierung aufweisen, wobei die Attributswerte und die zugehörigen Hash-Werte jeweils korrespondierende Indexe haben. Die Indizes können beispielsweise File Identifier (FID) oder Short FID (SFI) sein.

Die Hash-Werte sind mit einem ersten Hash-Algorithmus erzeugt. Der erste Hash-algorithmus kann auf dem ID-Token 106 gespeichert sein und die Hash-Werte wurden nach dem Speichern der Attributswerte durch den ID-Token 106 ermittelt und im Speicherbereich 126 gespeichert. Alternativ können die Hash-Werte vorab ermittelt und in den Speicherbereich 126 kopiert werden.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Nach der Nutzerauthentifizierung, der Authentifizierung des ID-Provider-Computersystems gegenüber dem ID-Token sowie dem Senden der ersten Attributsspezifikation erfolgt zunächst das Nachladen der Attribute gemäß der zweiten Attributsspezifikation.

Für die Attribute gemäß der zweiten Attributsspezifikation werden nach dem Speichern der Attribute gemäß der zweiten Attributsspezifikation im ID-Token die Hash-Werte mit dem ersten Hash-Aigorithmus erzeugt und im ID-Token gespeichert. Die Hash-Werte zu den Attributen gemäß der zweiten Attributsspezifikation können, ebenso wie die Attribute gemäß der zweiten Attributsspezifikation in einem nichtflüchtigen oder einem flüchtigen Speicher gespeichert werden
Nachdem die Attribute an das Dienst-Computersystem 103 gesendet wurden, wird eine Signaturanforderung für die empfangenen Attribute an den ID-Token gesendet.

Die Signaturanforderung enthält eine Spezifikation der an das Dienst-Computersystem 103 übermittelten Attribute.

Nach Empfang der Signaturanfrage wird mit Programminstruktionen eine Kombination der Hash-Werte der gesendeten Attribute erzeugt. Die Kombination der Hash-Werte kann durch Konkatenieren, Kombinieren oder eine andere geeignete Kombinationsmöglichkeit erzeugt werden.

Abschließend wird durch weitere Programminstruktionen mit einem zweiten Hash-Algorithmus aus der Kombination der Hash-Werte ein Gesamt-Hash-Wert ermittelt.

Aus diesem Gesamt-Hash-Wert wird mit dem im Speicherbereich 122 gespeicherten privaten Schlüssel des Nutzers eine Signatur erstellt, indem der Gesamt-Hashwert mit dem privaten Schlüssel verschlüsselt wird. Diese Signatur wird an das Dienst-Computersystem 103 gesendet.

Um die Echtheit der übermittelten Attribute zu verifizieren, können auf dem Terminal-Computersystem aus den empfangenen Attributen mit dem ersten Hash-Algorithmus die Hash-Werte der Attribute ermittelt werden. Anschließend wird mit gleichen Verfahren, das auch auf dem ID-Token verwendet wird, eine Kombination der Hash-Werte erzeugt und aus dieser Kombination mit dem zweiten Hash-Algorithmus ein Gesamt-Hash-Wert ermittelt. Dieser Gesamt-Hash-Wert muss mit dem Gesamt-Hash-Wert, der aus der gesendeten Signatur mit dem öffentlichen Schlüssel des Nutzers 102 erzeugt wurde, übereinstimmen.

Das beschriebene Verfahren hat den Vorteil, dass der Nutzer 102 die Kontrolle über die zu signierenden Daten behält. Eine blinde Signatur, bei der lediglich die von einem Computersystem an den ID-Token 106 gesendeten Hash-Werte signiert werden, wird so vermieden. Da die Erzeugung der Signatur vollständig durch den ID-Token 106 erfolgt, sind zudem keine weiteren Mittel oder Systeme zur Erzeugung der Signatur erforderlich. Somit ist zudem die größtmögliche Unabhängigkeit für den Nutzer sichergestellt.

Der erste und der zweite Hash-Algorithmus können übereinstimmen, so dass auf dem ID-Token nur ein Hash-Algorithmus gespeichert werden muss. Es ist aber auch denkbar, dass zwei verschiedene Hash-Algorithmen verwendet werden.

Um die Flexibilität des ID-Tokens zu erhöhen, beispielsweise, um Signaturen für verschiedene Dienste zu erzeugen, kann der Prozessor auch zur Erzeugung mehrerer unterschiedlicher Hash-Werte und/oder Gesamt-Hash-Werte mit unterschiedlichen Hash-Algorithmen konfiguriert sein. Es ist auch denkbar, dass die Kombination der Hash-Werte für verschiedene Dienste auf unterschiedliche Weise erzeugt wird.

Des Weiteren können auf dem ID-Token 106 mehrere private Schlüssel gespeichert sein, beispielsweise für verschiedene Nutzer oder verschiedene Dienste.

Beispielsweise wird mit der Attributsanforderung und der Signaturanforderung eine Kennung gesendet, welche Hash-Algorithmen und/oder welcher private Schlüssel zur Erzeugung der Signatur verwendet werden soll. Alternativ wird durch der private Schlüssel und/oder die verwendeten Hash-Algorithmen durch die Nutzerauthentifizierung am ID-Token festgelegt.

Nach der Erzeugung und Übertragung der Signatur können die Hash-Werte zu den Attributen gemäß der zweiten Attributsspezifikation gemeinsam mit den Attributen gemäß der zweiten Attributsspezifikation auf die oben beschriebene Weise gelöscht werden.

### Bezugszeichenliste

- 100: Nutzer-Computersystem
- 101: Lesegerät
- 102: Nutzer
- 103: Dienstanforderung
- 104: Schnittstelle
- 105: erste Attributspezifikation
- 106: ID-Token
- 107: Lesekommando
- 108: Schnittstelle
- 109: Antwort
- 110: Prozessor
- 111: zweite Attributspezifikation
- 112: Programminstruktionen
- 113: flüchtiger Speicher
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 131: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 172: Attribut-Provider-Computersystem
- 173: Attribut-Provider-Computersystem
- 174: Attribut-Provider-Computersystem
- 175: Datenbank
- 176: Antwort
- 177: Lesekommando
- 178: dritte Attributspezifikation
- 179: Antwort
- 180: Nachricht
- 181: Display
- 182: Bedienelement
- 183: Speicher

## Patentansprüche

1. Verfahren zum Lesen von Attributen aus einem ID-Token (106), der einem Nutzer (102) zugeordnet ist, wobei der ID-Token (106) einen nichtflüchtigen elektronischen Speicher (118) mit einem geschützten Speicherbereich (124) aufweist, in dem Attribute gespeichert sind, wobei ein Zugriff auf den geschützten Speicherbereich nur über einen Prozessor (128) des ID-Tokens (106) möglich ist, und wobei der ID-Token (106) eine Kommunikations-schnittstelle (108) zur Kommunikation mit einem Lesegerät (101) eines Nutzer-Computersystems (100) aufweist, mit folgenden Schritten:
- Senden einer Dienstanforderung (103) des Nutzers (102) von dem Nutzer-Computersystem (100) über ein Netzwerk (116) an einen Dienst-Computersystem (150), welches mit einem ID-Provider-Computersystem (136) gekoppelt ist,
- Senden einer ersten Attributspezifikation (105) von dem Dienst-Computersystem (150) an das ID-Provider-Computersystem (136) über das Netzwerk (116), wobei die erste Attributspezifikation (105) diejenigen Attribute spezifiziert, die das Dienst-Computersystem (150) zur Erbringung des mit der Dienstanforderung angeforderten Dienstes benötigt,
- Authentifizierung des Nutzers (102) gegenüber dem ID-Token (106),
- Authentifizierung des ID-Provider-Computersystems (136) gegenüber dem ID-Token (106),
- Authentifizierung des ID-Tokens (106) gegenüber dem ID-Provider-Computersystem (136),
- Aufbau eines ersten gesicherten Übertragungskanals (SM[CA]#1) mit Ende-zu-Ende-Verschlüsselung zwischen dem ID-Token (106) und dem ID-Provider-Computersystem (136) über das Netzwerk (116),
- Durchführung eines ersten Lesezugriffs (107) des ID-Provider-Computersystems (136) auf den ID-Token (106) zum Lesen der Attribute gemäß der ersten Attributspezifikation (105) aus dem ID-Token (106),
- Übertragung einer in dem Speicherbereich (124) des ID-Tokens (106) gespeicherten ersten Teilmenge der in der ersten Attributspezifikation (105) spezifizierten Attribute von dem ID-Token (106) an das ID-Provider-Computersystem (136) über den ersten gesicherten Übertragungskanal (SM[CA]#1),
- Erzeugung einer zweiten Attributspezifikation (111) einer zweiten Teilmenge der Attribute der ersten Attributspezifikation (105), die diejenige Attribute spezifiziert, welche in der ersten Teilmenge nicht beinhaltet sind und Übertragung der zweiten Attributspezifikation (111) von dem ID-Provider-Computersystem (136) an den ID-Token (106) über den ersten gesicherten Übertragungskanal (SM[CA]#1),
- Speicherung der zweiten Attributspezifikation (111) in dem ID-Token (106),
- Authentifizierung eines Attribut-Provider-Computersystems (172, 173, 174) gegenüber dem ID-Token (106),
- Authentifizierung des ID-Tokens (106) gegenüber dem Attribute-Provider-Computersystem (172, 173, 174),
- Aufbau eines zweiten gesicherten Übertragungskanals (SM[CA]#2) mit Ende-zu-Ende-Verschlüsselung zwischen dem Attribut-Provider-Computersystem (172, 173, 174) und dem ID-Token (106), wobei der erste gesicherte Übertragungskanal (SM[CA]#1) bestehen bleibt,
- Übertragung der zweiten Attributspezifikation (111) von dem ID-Token (106) über den zweiten gesicherten Übertragungskanal (SM[CA]#1) an das Attribut-Provider-Computersystem (172, 173, 174),
- Durchführung eines Schreibzugriffs des Attribut-Provider-Computersystems (172, 173, 174) über den zweiten gesicherten Übertragungskanal (SM[CA]#2) zum Speichern von Attributen gemäß der zweiten Attributspezifikation (111) in dem ID-Token (106),
- Durchführung eines zweiten Lesezugriffs des ID-Provider-Computersystems (136) über den ersten gesicherten Übertragungskanal (SM[CA]#1) zum Lesen der von dem Attribut-Provider-Computersystem (172, 173, 174) gemäß der zweiten Attributspezifikation (111) in dem ID-Token (106) gespeicherten Attribute,
- Ausgabe der aufgrund der Lesezugriffe von dem ID-Provider-Computersystem (136) aus dem ID-Token (106) ausgelesenen Attribute an das Dienst-Computersystem (150),
- Löschen der Attribute gemäß der zweiten Attributspezifikation (111) nach dem Lesezugriff.

2. Verfahren nach Anspruch 1, wobei auf dem ID-Token (106) die mit einem Hash-Algorithmus erzeugten Hash-Werte der Attribute gemäß der zweiten Attributspezifikation (111) gespeichert werden, wobei die Hash-Werte gemeinsam mit den Attributen gelöscht werden, und/oder wobei die Hash-Werte der Attribute mit einem auf dem ID-Token (106) gespeicherten Hash-Algorithmus erzeugt und auf dem ID-Token (106) gespeichert werden, und/oder
wobei nach dem Auslesen der Attribute eine Signatur der ausgelesenen Attribute mit folgenden Schritten erzeugt wird:
- Senden einer Signaturanforderung vom ID-Provider-Computersystem (136) an den ID-Token (106), wobei die Signaturanforderung die Attributspezifikation enthält,
- Erzeugung einer Kombination der Hash-Werte aus dem auf dem ID-Token (106) abgespeicherten Hash-Werten der zur Attributspezifikation korrespondierenden Attributwerte durch den ID-Token,
- Erzeugung eines Gesamt-Hash-Wertes aus der Kombination der Hash-Werte durch Ausführung eines zweiten Hash-Algorithmus nach Empfang der Signaturanfrage durch den ID-Token,
- Erzeugung einer Signatur des Gesamt-Hash-Wertes mit dem privaten Schlüssel des Nutzers,
- Senden der Signatur an das ID-Provider-Computersystem (136), und
- Empfang der Signatur durch das ID-Provider-Computersystem (136).

3. Verfahren nach einem der vorhergehenden Ansprüche, wobei die Schritte iterativ für weitere Attribut-Provider-Computersysteme (172, 173, 174) durchgeführt werden, solange bis eine Abbruchbedingung erreicht ist.

4. Verfahren nach Anspruch 3, wobei es sich bei der Abbruchbedingung um Folgendes handelt:
- sämtliche der Attribute gemäß der ersten Attributspezifikation (105) sind in dem ID-Token (106) gespeichert,
- eine maximale Anzahl von Schreibzugriffen ist erreicht,
- eine maximale Zeitdauer seit dem Senden der Dienstanforderung wird überschritten.

5. Verfahren nach einem der vorhergehenden Ansprüche, wobei die Authentifizierung des ID-Provider-Computersystems (136) gegenüber dem ID-Token (106) mithilfe eines Berechtigungszertifikats des ID-Provider-Computersystems (136) erfolgt, in dem Leserechte des ID-Provider-Computersystems (136) zum Lesen von Attributen aus dem ID-Token (106) spezifiziert sind, wobei der ID-Token (106) für die Lesezugriffe des ID-Provider-Computersystems (136) eine Prüfung der Leseberechtigung des ID-Provider-Computersystems (136) mithilfe des Berechtigungszertifikats durchführt, und/oder
wobei die Authentifizierung des Attribut-Provider-Computersystems (172, 173, 174) mithilfe eines Berechtigungszertifikats des Attribut-Provider-Computersystems (172, 173, 174) erfolgt, in dem Rechte des Attribut-Provider-Computersystems (172, 173, 174) zum Lesen einer Attributspezifikation aus dem ID-Token (106) und zum Schreiben von Attributen in den ID-Token (106) spezifiziert sind, wobei der ID-Token (106) das Recht zum Lesen des Attribut-Provider-Computersystems (172, 173, 174) vor der Übertragung einer Attributspezifikation an das Attribut-Provider-Computersystem (172, 173, 174) prüft und wobei der ID-Token (106) das Recht zum Schreiben von Attributen in den ID-Token (106) vor dem Schreiben von Attributen durch das Attribut-Provider-Computersystem (172, 173, 174) prüft.

6. Verfahren nach einem der vorhergehenden Ansprüche, wobei vor der Speicherung von Attributen in dem ID-Token (106) aufgrund eines Schreibzugriffs die zu schreibenden Attribute auf einem Display des ID-Tokens (106), des Lesegeräts (101) oder des Nutzer-Computersystems (100) angezeigt werden, und die zu schreibenden Attribute vorzugsweise erst nach Eingabe einer Bestätigung durch den Nutzer (102) durch Betätigung eines Bedienelements des ID-Tokens (106), des Lesegeräts (101) bzw. des Nutzer-Computersystems (100) in den nichtflüchtigen elektronischen Speicher (113) geschrieben werden.

7. Verfahren nach einem der vorhergehenden Ansprüche, wobei der ID-Token einen flüchtigen Speicher aufweist und die Attribute gemäß der zweiten Attributspezifikation (111) und die zugehörigen Hash-Werte in dem flüchtigen Speicher gespeichert werden und nach Beendigung der Verbindung zwischen dem ID-Token (106) und dem Nutzer-Computersystem (100) gelöscht werden.

8. Verfahren nach einem der Ansprüche 1 bis 6, wobei der ID-Token (106) einen flüchtigen Speicher aufweist und wobei die Verweise auf die Attribute gemäß der zweiten Attributspezifikation (111) und die zugehörigen Hash-Werte in dem flüchtigen Speicher gespeichert werden und nach Beendigung der Verbindung zwischen dem ID-Token (106) und dem Nutzer-Computersystem (100) gelöscht werden, und/oder
wobei im ID-Token (106) Programminstruktionen gespeichert sind, die nach dem Lesezugriff, bei der Herstellung einer erneuten Verbindung zwischen dem ID-Token (106) und einem Nutzer-Computersystem (100) die Attribute gemäß der zweiten Attributspezifikation (111) und die zugehörigen Hash-Werte löschen.

9. Verfahren nach einem der vorhergehenden Ansprüche, wobei nach dem Empfang der Attribute und der Hash-Werte eine Löschaufforderung an den ID-Token (106) gesendet wird und/oder
wobei es sich bei dem ID-Token (106) um ein Wert- oder Sicherheitsdokument handelt, insbesondere ein Ausweisdokument, das heißt ein ID-Dokument, insbesondere einen elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

10. ID-Token (106), der einem Nutzer (102) zugeordnet ist, wobei der ID-Token (106) einen elektronischen Speicher (118) mit einem geschützten Speicherbereich (124) aufweist, in dem Attribute gespeichert sind, wobei ein Zugriff auf den geschützten Speicherbereich (124) nur über einen Prozessor (128) des ID-Tokens (106) möglich ist, wobei der ID-Token (106) eine Kommunikationsschnittstelle (108) zur Kommunikation mit einem Lesegerät (101) eines Nutzer-Computersystems (100) aufweist, und wobei der ID-Token (106) zur Durchführung der folgenden Schritte konfiguriert ist:
- Authentifizierung des Nutzers (102) gegenüber dem ID-Token (106),
- Authentifizierung eines ID-Provider-Computersystems (136) gegenüber dem ID-Token (106),
- Authentifizierung des ID-Tokens (106) gegenüber dem ID-Provider-Computersystem (136),
- Aufbau eines ersten gesicherten Übertragungskanals (SM[CA]#1) mit Ende-zu-Ende-Verschlüsselung zwischen dem ID-Token (106) und dem ID-Provider-Computersystem (136) über das Netzwerk (116),
- Ermöglichung eines ersten Lesezugriffs des ID-Provider-Computersystems (136) auf den ID-Token (106) zum Lesen der Attribute gemäß einer ersten Attributspezifikation (105) aus dem ID-Token,
- Senden einer in dem Speicherbereich (124) des ID-Tokens (106) gespeicherten ersten Teilmenge der in der ersten Attributspezifikation (105) spezifizierten Attribute von dem ID-Token (106) an das ID-Provider-Computersystem (136) über den ersten gesicherten Übertragungskanal (SM[CA]#1),
- Empfang einer zweiten Attributspezifikation (111), die diejenige Attribute einer zweiten Teilmenge der Attribute der ersten Attributspezifikation (105) spezifiziert, welche in der ersten Teilmenge nicht beinhaltet sind, von dem ID-Provider-Computersystem (136) durch den ID-Token (106) über den ersten gesicherten Übertragungskanal (SM[CA]#1),
- Speicherung der zweiten Attributspezifikation (111) in dem ID-Token (106),
- Authentifizierung eines Attribut-Provider-Computersystems (172, 173, 174) gegenüber dem ID-Token (106),
- Authentifizierung des ID-Tokens (106) gegenüber dem Attribut-Provider-Computersystem (172, 173, 174),
- Aufbau eines zweiten gesicherten Übertragungskanals (SM[CA]#2) mit Ende-zu-Ende-Verschlüsselung zwischen dem Attribut-Provider-Computersystem (172, 173, 174) und dem ID-Token (106), wobei der erste gesicherte Übertragungskanal (SM[CA]#1) bestehen bleibt,
- Übertragung der zweiten Attributspezifikation (111) von dem ID-Token (106) über den zweiten gesicherten Übertragungskanal (SM[CA]#2) an das Attribut-Provider-Computersystem (172, 173, 174),
- Ermöglichung eines Schreibzugriffs des Attribut-Provider-Computersystems (172, 173, 174) über den zweiten gesicherten Übertragungskanal (SM[CA]#2) zum Speichern von Attributen gemäß der zweiten Attributspezifikation (111) in dem ID-Token,
- Ermöglichung eines zweiten Lesezugriffs des ID-Provider-Computersystems (136) über den ersten gesicherten Übertragungskanal (SM[CA]#1) zum Lesen der von dem Attribut-Provider-Computersystem (172, 173, 174) gemäß der zweiten Attributspezifikation (111) in dem ID-Token (106) gespeicherten Attribute,
- Löschen der Attribute gemäß der zweiten Attributspezifikation (111) nach dem Lesezugriff.

11. ID-Token nach Anspruch 10, wobei die Kommunikationsschnittstelle (108) des ID-Token (106) zur drahtlosen Kommunikation und zum drahtlosen Einkopplen von Energie in den ID-Token (106) durch das Lesegerät (101) ausgebildet ist, um den ID-Token (106) mit der für seinen Betrieb erforderlichen elektrischen Energie zu versorgen, wobei der ID-Token (106) einen flüchtigen elektronischen Speicher aufweist, und der ID-Token (106) so konfiguriert ist, dass die zweite Attributspezifikation (111) in dem flüchtigen elektronischen Speicher gespeichert wird, sodass die zweite Attributspezifikation (111) aus dem flüchtigen elektronischen Speicher gelöscht wird, wenn der ID-Token (106) aus der Reichweite des Lesegeräts (101) entfernt wird, und wobei die aufgrund des Schreibzugriffs des Attribut-Provider-Computersystems (172, 173, 174) in dem ID-Token (106) gespeicherten Attribute in dem nichtflüchtigen elektronischen Speicher gespeichert werden, sodass auf diese durch einen nachfolgenden weiteren ersten Lesezugriff aufgrund einer weiteren Dienstanforderung nicht zugegriffen werden kann.

12. Attribut-Provider-Computersystem (172, 173, 174) mit einer Netzwerk-Schnittstelle (138) zum Zugriff auf einen ID-Token (106) über ein Netzwerk (116), wobei das Attribut-Provider-Computersystem (172, 173, 174) zur Durchführung der folgenden Schritte konfiguriert ist:
- Authentifizierung gegenüber dem ID-Token (106),
- Authentifizierung des ID-Tokens (106),
- Aufbau eines zweiten gesicherten Übertragungskanals (SM[CA]#2) mit dem ID-Token (106) mit Ende-zu-Ende-Verschlüsselung,
- Lesen einer Attributspezifikation (111) aus dem ID-Token (106) durch einen Netzwerkzugriff über den zweiten gesicherten Übertragungskanal (SM[CA]#2),
- Durchführung eines Datenbankzugriffs um Attribute gemäß der Attributspezifikation (111) aus einer Datenbank zu lesen,
- Durchführung eines Schreibzugriffs über den zweiten gesicherten Übertragungskanal (SM[CA]#2) auf den ID-Token (106), um die aus der Datenbank gelesenen Attribute in den ID-Token (106) zu schreiben,
- für den Fall, dass nicht sämtliche Attribute gemäß der Attributspezifikation (111) aus der Datenbank auslesbar sind, Erzeugung einer weiteren Attributspezifikation, die diejenigen Attribute der Attributspezifikation (111) spezifiziert, die in den aufgrund des Schreibzugriffs in den ID-Token (106) geschriebenen Attributen nicht beinhaltet sind,
- Speicherung der weiteren Attributspezifikation in dem ID-Token (106) um die vorherige Attributspezifikation zu ersetzen.

13. Attribut-Provider-Computersystem nach Anspruch 12, mit einem Berechtigungszertifikat zur Authentifizierung gegenüber dem ID-Token (106), wobei in dem Berechtigungszertifikat Rechte des Attribut-Provider-Computersystems (172, 173, 174) zum Lesen der Attributspezifikation aus dem ID-Token (106) und zum Schreiben von Attributen in den ID-Token (106) spezifiziert sind.

14. Computersystem mit einem ID-Token (106) nach einem der Ansprüche 10 oder 11 und mit einem ID-Provider-Computersystem (136), wobei das ID-Provider-Computersystem (136) dazu konfiguriert ist, zum Lesen von Attributen aus dem ID-Token (106) gemäß der ersten Attributspezifikation (105) mehrfach hintereinander über denselben ersten gesicherten Übertragungskanal (SM[CA]#1) Attribute aus dem ID-Token (106) auszulesen.

15. Computersystem nach Anspruch 14, mit zumindest einem Attribut-Provider-Computersystem (172, 173, 174) nach einem der Anspruch 12 oder 13.

## Claims

1. A method for reading attributes from an ID token (106) which is assigned to a user (102), wherein the ID token (106) is a non-volatile electronic memory (118) with a protected memory area (124) in which attributes are stored, wherein access to the protected memory area is possible only via a processor (128) of the ID token (106), and wherein the ID token (106) has a communication interface (108) for communicating with a reader (101) of a user computer system (100), said method comprising the following steps:
- sending a service request (103) on the part of the user (102) from the user computer system (100) via a network (116) to a service computer system (150) which is coupled to an ID provider computer system (136);
- sending a first attribute specification (105) from the service computer system (150) to the ID provider computer system (136) via the network (116), wherein the first attribute specification (105) specifies those attributes which the service computer system (150) requires in order to provide the service requested by means of the service request;
- authenticating the user (102) to the ID token (106);
- authenticating the ID provider computer system (136) to the ID token (106);
- authenticating the ID token (106) to the ID provider computer system (136);
- establishing a first secured transmission channel (SM[CA]#1) with end-to-end encryption between the ID token (106) and the ID provider computer system (136) via the network (116);
- performing a first read access (107) by means of the ID provider computer system (136) to the ID token (106) in order to read from the ID token (106) the attributes according to the first attribute specification (105);
- transmitting a first subset of the attributes specified in the first attribute specification (105), which first subset is stored in the memory area (124) of the ID token (106), from the ID token (106) to the ID provider computer system (136) via the first secured transmission channel (SM[CA]#1);
- generating a second attribute specification (111) of a second subset of the attributes of the first attribute specification (105) which specifies those attributes that are not contained in the first subset, and transmitting the second attribute specification (111) from the ID provider computer system (136) to the ID token (106) via the first secured transmission channel (SM[CA]#1);
- storing the second attribute specification (111) in the ID token (106);
- authenticating an attribute provider computer system (172, 173, 174) to the ID token (106);
- authenticating the ID token (106) to the attribute provider computer system (172, 173, 174);
- establishing a second secured transmission channel (SM[CA]#2) with end-to-end encryption between the attribute provider computer system (172, 173, 174) and the ID token (106), wherein the first secured transmission channel (SM[CA]#1) is maintained;
- transmitting the second attribute specification (111) from the ID token (106) via the second secured transmission channel (SM[CA]#1) to the attribute provider computer system (172, 173, 174);
- performing a write access by means of the attribute provider computer system (172, 173, 174) via the second secured transmission channel (SM[CA]#2) in order to store in the ID token (106) attributes according to the second attribute specification (111);
- performing a second read access by means of the ID provider computer system (136) via the first secured transmission channel (SM[CA]#1) in order to read the attributes stored in the ID token (106) by the attribute provider computer system (172, 173, 174) according to the second attribute specification (111);
- outputting to the service computer system (150) the attributes read from the ID token (106) on account of the read access procedures performed by the ID provider computer system (136); and
- deleting the attributes according to the second attribute specification (111) after the read access.

2. The method according to claim 1, wherein the hash values of the attributes according to the second attribute specification (111), which hash values are generated by means of a hash algorithm, are stored on the ID token (106), wherein the hash values are deleted together with the attributes, and/or
wherein the hash values of the attributes are generated by means of a hash algorithm stored on the ID token (106) and are stored on the ID token (106), and/or
wherein, once the attributes have been read, a signature of the read attributes is generated by means of the following steps:
- sending a signature request from the ID provider computer system (136) to the ID token (106), wherein the signature request contains the attribute specification;
- generating, by the ID token, a combination of the hash values from the hash values, stored on the ID token (106), of the attribute values corresponding to the attribute specification;
- generating, by the ID token, a total hash value from the combination of the hash values by executing a second hash algorithm following receipt of the signature request;
- generating a signature of the total hash value using the private key of the user;
- sending the signature to the ID provider computer system (136); and
- receiving the signature by the ID provider computer system (136).

3. The method according to either one of the preceding claims, wherein the steps are performed iteratively for further attribute provider computer systems (172, 173, 174) until a termination condition is satisfied.

4. The method according to claim 3, wherein the termination condition is constituted by the following:
- all of the attributes according to the first attribute specification (105) are stored in the ID token (106);
- a maximum number of write access procedures is reached;
- a maximum period of time since the service request was sent is exceeded.

5. The method according to any one of the preceding claims, wherein the ID provider computer system (136) is authenticated to the ID token (106) with the aid of an authorisation certificate of the ID provider computer system (136) in which read permissions of the ID provider computer system (136) for reading attributes from the ID token (106) are specified, wherein the ID token (106), for the read access of the ID provider computer system (136), verifies the read authorisation of the ID provider computer system (136) with the aid of the authorisation certificate, and/or wherein the attribute provider computer system (172, 173, 174) is authenticated with the aid of an authorisation certificate of the attribute provider computer system (172, 173, 174) in which permissions of the attribute provider computer system (172, 173, 174) for reading an attribute specification from the ID token (106) and for writing attributes into the ID token (106) are specified, wherein the ID token (106) verifies the read permission of the attribute provider computer system (172, 173, 174) before an attribute specification is transmitted to the attribute provider computer system (172, 173, 174), and wherein the ID token (106) verifies the permission to write attributes into the ID token (106) before attributes are written by the attribute provider computer system (172, 173, 174).

6. The method according to any one of the preceding claims, wherein, before attributes are stored in the ID token (106) on account of write access, the attributes to be written are visualised on a display of the ID token (106), the reader (101), or the user computer system (100), and the attributes to be written are preferably written into the non-volatile electronic memory (113) only following input of a confirmation by the user (102) by actuation of a control element of the ID token (106), the reader (101), or the user computer system (100).

7. The method according to any one of the preceding claims, wherein the ID token comprises a volatile memory and the attributes are stored in the volatile memory according to the second attribute specification (111) and the associated hash values and are deleted once the connection between the ID token (106) and the user computer system (100) is terminated.

8. The method according to any one of claims 1 to 6, wherein the ID token (106) comprises a volatile memory, and wherein the references to the attributes according to the second attribute specification (111) and the associated hash values are stored in the volatile memory and are deleted once the connection between the ID token (106) and the user computer system (100) is terminated, and/or
wherein program instructions are stored in the ID token (106) and delete the attributes according to the second attribute specification (111) and the associated hash values following the read access, when a new connection between the ID token (106) and the user computer system (100) is produced.

9. The method according to any one of the preceding claims, wherein, once the attributes and the hash values have been received, a deletion request is sent to the ID token (106), and/or
wherein the ID token (106) is a value or security document, in particular an identity document, i.e. an ID document, in particular an electronic ID card, passport, driver's licence, company identity document, or a payment means, for example a banknote, a credit card or another proof of authority, such as an admission ticket, a consignment note or a visa, in particular a smart card, in particular with RFID and/or NFC interface.

10. An ID token (106) which is assigned to a user (102), wherein the ID token (106) comprises an electronic memory (118) with a protected memory area (124) in which attributes are stored, wherein access to the protected memory area (124) is possible only via a processor (128) of the ID token (106), wherein the ID token (106) has a communication interface (108) for communicating with a reader (101) of a user computer system (100), and wherein the ID token (106) is configured to carry out the following steps:
- authenticating the user (102) to the ID token (106);
- authenticating an ID provider computer system (136) to the ID token (106);
- authenticating the ID token (106) to the ID provider computer system (136);
- establishing a first secured transmission channel (SM[CA]#1) with end-to-end encryption between the ID token (106) and the ID provider computer system (136) via the network (116);
- allowing a first read access by means of the ID provider computer system (136) to the ID token (106) in order to read from the ID token the attributes according to the first attribute specification (105);
- sending a first subset of the attributes specified in the first attribute specification (105), which first subset is stored in the memory area (124) of the ID token (106), from the ID token (106) to the ID provider computer system (136) via the first secured transmission channel (SM[CA]#1);
- receiving, from the ID provider computer system (136) by the ID token (106) via the first secured transmission channel (SM[CA]#1), a second attribute specification (111) which specifies those attributes of a second subset of the attributes of the first attribute specification (105) that are not contained in the first subset;
- storing the second attribute specification (111) in the ID token (106);
- authenticating an attribute provider computer system (172, 173, 174) to the ID token (106);
- authenticating the ID token (106) to the attribute provider computer system (172, 173, 174);
- establishing a second secured transmission channel (SM[CA]#2) with end-to-end encryption between the attribute provider computer system (172, 173, 174) and the ID token (106), wherein the first secured transmission channel (SM[CA]#1) is maintained;
- transmitting the second attribute specification (111) from the ID token (106) via the second secured transmission channel (SM[CA]#2) to the attribute provider computer system (172, 173, 174);
- allowing write access by means of the attribute provider computer system (172, 173, 174) via the second secured transmission channel (SM[CA]#2) in order to store in the ID token attributes according to the second attribute specification (111);
- allowing a second read access by means of the ID provider computer system (136) via the first secured transmission channel (SM[CA]#1) in order to read the attributes stored in the ID token (106) by the attribute provider computer system (172, 173, 174) according to the second attribute specification (111); and
- deleting the attributes according to the second attribute specification (111) after the read access.

11. The ID token according to claim 10, wherein the communication interface (108) of the ID token (106) is designed for wireless communication and for wireless coupling of energy into the ID token (106) through the reader (101) in order to supply the ID token (106) with the electrical energy necessary for its operation, wherein the ID token (106) has a volatile electronic memory and the ID token (106) is configured such that the second attribute specification (111) is stored in the volatile electronic memory, so that the second attribute specification (111) is deleted from the volatile electronic memory if the ID token (106) is removed from the range of the reader (101), and wherein the attributes stored in the ID token (106) on account of the write access of the attribute provider computer system (172, 173, 174) are stored in the non-volatile electronic memory so that they may not be accessed by a subsequent further first read access on account of a further service request.

12. An attribute provider computer system (172, 173, 174) with a network interface (138) for accessing an ID token (106) via a network (116), wherein the attribute provider computer system (172, 173, 174) is configured to carry out the following steps:
- authenticating to the ID token (106);
- authenticating the ID token (106);
- establishing a second secured transmission channel (SM[CA]#2) to the ID token (106) with end-to-end encryption;
- reading an attribute specification (111) from the ID token (106) by network access via the second secured transmission channel (SM[CA]#2);
- performing database access in order to read attributes according to the attribute specification (111) from a database;
- performing write access via the second secured transmission channel (SM[CA]#2) to the ID token (106) in order to write the attributes read from the database into the ID token (106);
- if not all attributes according to the attribute specification (111) are readable from the database, generating a further attribute specification which specifies those attributes of the attribute specification (111) that are not contained in the attributes written into the ID token (106) on account of the write access;
- storing the further attribute specification in the ID token (106) in order to replace the previous attribute specification.

13. The attribute provider computer system according to claim 12, comprising an authorisation certificate for authentication to the ID token (106), wherein permissions of the attribute provider computer system (172, 173, 174) to read the attribute specification from the ID token (106) and to write attributes into the ID token (106) are specified in the authorisation certificate.

14. A computer system comprising an ID token (106) according to either one of claims 10 or 11 and comprising an ID provider computer system (136), wherein the ID provider computer system (136), in order to read attributes from the ID token (106) according to the first attribute specification (105), is configured to read attributes from the ID token (106) multiple times in succession via the same first secured transmission channel (SM[CA]#1).

15. The computer system according to claim 14, comprising at least one attribute provider computer system (172, 173, 174) according to either one of claims 12 or 13.

## Revendications

1. Procédé de lecture d'attributs à partir d'un jeton d'ID (106), qui est associé à un utilisateur (102), où le jeton d'ID (106) présente une mémoire électronique non volatile (118) dotée d'une zone de mémoire sécurisée (124), dans laquelle sont stockés des attributs, où un accès à la zone de mémoire sécurisée n'est possible que par le biais d'un processeur (128) du jeton d'ID (106), et où le jeton d'ID (106) présente une interface de communication (108) pour la communication avec un lecteur (101) d'un système informatique d'utilisateur (100), avec les étapes suivantes :
- l'envoi d'une demande de service (103) de l'utilisateur (102) à partir du système informatique d'utilisateur (100) à un système informatique de service (150), lequel est couplé à un système informatique fournisseur d'ID (136), par le biais d'un réseau (116),
- l'envoi d'une première spécification d'attributs (105) du système informatique de service (150) au système informatique fournisseur d'ID (136) par le biais du réseau (116), où la première spécification d'attributs (105) spécifie les attributs en question dont a besoin le système informatique de service (150) pour l'accomplissement du service demandé avec la demande de service,
- l'authentification de l'utilisateur (102) vis à vis du jeton d'ID (106),
- l'authentification du système informatique fournisseur d'ID (136) vis-à-vis du jeton ID (106),
- l'authentification du jeton d'ID (106) vis-à-vis du système informatique fournisseur d'ID (136),
- l'établissement d'un premier canal de transmission sécurisé (SM[CA]#1) avec un cryptage de bout en bout entre le jeton d'ID (106) et le système informatique fournisseur d'ID (136) par le biais du réseau (116),
- l'exécution d'un premier accès en lecture (107) du système informatique fournisseur d'ID (136) dans le jeton d'ID (106) pour la lecture des attributs selon la première spécification d'attributs (105) à partir du jeton d'ID (106),
- la transmission d'une première quantité partielle des attributs spécifiés dans la première spécification d'attributs (105) stockée dans la zone de mémoire (124) du jeton d'ID (106) à partir du jeton d'ID (106) au système informatique fournisseur d'ID (136) par le biais du premier canal de transmission sécurisé (SM[CA]#1),
- la création d'une deuxième spécification d'attributs (111) d'une deuxième quantité partielle des attributs de la première spécification d'attributs (105) qui spécifie les attributs en question, lesquels ne sont pas contenus dans la première quantité partielle et la transmission de la deuxième spécification d'attributs (111) du système informatique fournisseur d'ID (136) au jeton d'ID (106) par le biais du premier canal de transition sécurisé (SM[CA]#1),
- le stockage de la deuxième spécification d'attributs (111) dans le jeton d'ID (106),
- l'authentification d'un système informatique fournisseur d'attributs (172, 173, 174) vis-à-vis du jeton d'ID (106),
- l'authentification du jeton d'ID (106) vis-à-vis du système informatique fournisseur d'attributs (172, 173, 174),
- l'établissement d'un deuxième canal de transmission sécurisé (SM[CA]#2) avec un cryptage de bout en bout entre le système informatique fournisseur d'attributs (172, 173, 174) et le jeton d'ID (106), où le premier canal de transport sécurisé (SM[CA]#1) reste en fonction,
- la transmission de la deuxième spécification d'attributs (111) du jeton d'ID (106) au système informatique fournisseur d'attributs (172, 173,174) par le biais du deuxième canal de transmission sécurisé (SM[CA]#1),
- l'exécution d'un accès en écriture du système informatique fournisseur d'attributs (172, 173, 174) par le biais du deuxième canal de transmission sécurisé (SM[CA]#2) pour le stockage d'attributs selon la deuxième spécification d'attributs (111) dans le jeton d'ID (106),
- l'exécution d'un deuxième accès en lecture du système informatique fournisseur d'ID (136) par le biais du premier canal de transmission sécurisé (SM[CA]#1) pour la lecture des attributs stockés dans le jeton d'ID (106) selon la deuxième spécification d'attributs (111) à partir du système informatique fournisseur d'ID (172, 173, 174),
- la libération des attributs lus à partir du jeton d'ID (106) en raison des accès en lecture par le système informatique fournisseur d'ID (136), vers le système informatique de service(150),
- l'effacement des attributs selon la deuxième spécification d'attributs (111) après l'accès en lecture.

2. Procédé selon la revendication 1, dans lequel les valeurs de hachage des attributs selon la deuxième spécification d'attributs (111) générées avec un algorithme de hachage sont stockées sur le jeton d'ID (106), où les valeurs de hachage sont effacées conjointement avec les attributs, et/ou
dans lequel les valeurs de hachage des attributs sont créées avec un algorithme de hachage stocké sur le jeton d'ID (106) et sont stockées sur le jeton d'ID (106), et/ou dans lequel, après la lecture des attributs une signature des attributs lus est créée avec les étapes suivantes :
- l'envoi d'une demande de signature du système informatique fournisseur d'ID (136) au jeton d'ID (106), où la demande de signature contient la spécification d'attributs,
- la création d'une combinaison des valeurs de hachage à partir des valeurs de hachage déstockées à partir du jeton d'ID (106) des valeurs d'attributs correspondant à la spécification d'attributs par le jeton d'ID,
- la création d'une valeur de hachage d'ensemble à partir de la combinaison des valeurs de hachage par l'exécution d'un deuxième algorithme de hachage après la réception de la demande de signature par le jeton d'ID,
- la création d'une signature de la valeur de hachage d'ensemble avec la clé privée de l'utilisateur,
- l'envoi de la signature au système informatique fournisseur d'ID (136), et
- la réception de la signature par le système informatique fournisseur d'ID (136).

3. Procédé selon l'une des revendications précédentes, dans lequel les étapes sont exécutées de manière itérative pour de nouveaux systèmes informatiques de fournisseurs d'attributs (172, 173, 174) jusqu'à ce que l'on atteigne une condition d'interruption.

4. Procédé selon la revendication 3, dans lequel, dans le cas de la condition d'interruption, il s'agit des faits suivants :
- tous les attributs selon la première spécification d'attributs (105) sont stockés dans le jeton d'ID (106),
- un nombre maximal d'accès en écriture est atteint,
- une durée maximale depuis l'envoi de la demande de service est dépassée.

5. Procédé selon l'une des revendications précédentes, dans lequel l'authentification du système informatique fournisseur d'ID (136) vis-à-vis du jeton d'ID (106) a lieu à l'aide d'un certificat d'autorisation du système informatique fournisseur d'ID (136), dans lequel des droits de lecture du système informatique fournisseur d'ID (136) sont spécifiés pour la lecture d'attributs à partir du jeton d'ID (106), où le jeton d'ID (106) exécute une vérification de l'autorisation de lecture du système informatique fournisseur d'ID (136) à l'aide du certificat d'autorisation pour les accès en lecture du système informatique fournisseur d'ID (136), et/ou
dans lequel l'authentification du système informatique fournisseur d'attributs (172, 173, 174) a lieu à l'aide d'un certificat d'autorisation du système informatique fournisseur d'attributs (172, 173, 174), en ce que des droits du système informatique fournisseur d'attributs (172, 173, 174) sont spécifiés pour la lecture d'une spécification d'attributs à partir du jeton d'ID (106) et pour l'écriture d'attributs dans le jeton d'ID (106), où le jeton d'ID (106) vérifie le droit pour la lecture du système informatique fournisseur d'attributs (172, 173, 174) avant la transmission d'une spécification d'attributs au système informatique fournisseur d'attributs(172, 173, 174) et où le jeton d'ID (106) vérifie le droit à l'écriture d'attributs dans le jeton d'ID (106) avant l'écriture d'attributs par le système informatique fournisseur d'attributs (172, 173, 174).

6. Procédé selon l'une des revendications précédentes, dans lequel, avant le stockage d'attributs dans le jeton d'ID (106), les attributs devant être écrits en raison d'un accès en écriture sont affichés sur un écran du jeton d'ID (106), du lecteur (101) ou du système informatique d'utilisateur (100) et les attributs devant être écrits sont écrits dans la mémoire électronique non volatile (113) de préférence seulement après l'entrée d'une confirmation par l'utilisateur (102) par l'actionnement d'un élément d'actionnement du jeton d'ID (106), du lecteur (101), respectivement, du système informatique d'utilisateur (100).

7. Procédé selon l'une des revendications précédentes, dans lequel le jeton d'ID présente une mémoire volatile et les attributs selon la deuxième spécification d'attributs (111) et les valeurs de hachage correspondantes sont stockés dans la mémoire volatile et sont effacés après la fin de la communication entre le jeton d'ID (106) et le système informatique d'utilisateur (100).

8. Procédé selon l'une des revendications 1 à 6, dans lequel le jeton d'ID (106) présente une mémoire volatile et dans lequel les références concernant les attributs selon la deuxième spécification d'attributs (111) et les valeurs de hachage correspondantes sont stockés dans la mémoire volatile et sont effacés après la fin de la communication entre le jeton d'ID (106) et le système informatique d'utilisateur (100), et/ou dans lequel des instructions de programme sont stockées dans le jeton d'ID (106) qui effacent les attributs selon la deuxième spécification d'attributs (111) et les valeurs de hachage correspondantes après l'accès en lecture, lors de l'établissement d'une nouvelle liaison entre le jeton d'ID (106) et un système informatique d'utilisateur (100).

9. Procédé selon l'une des revendications précédentes, dans lequel, après la réception des attributs et des valeurs de hachage, une demande d'effacement est envoyée au jeton d'ID (106), et/ou
dans lequel, dans le cas du jeton d'ID (106), il s'agit d'un document de valeur ou de sécurité, notamment d'un document d'identité, c'est-à-dire d'un document d'ID, notamment d'une carte d'identité personnelle électronique, d'un passeport, d'un permis de conduire, d'une carte d'entreprise ou d'un moyen de paiement, comme, par exemple, un billet de banque, une carte de crédit ou un autre document d'autorisation, comme, par exemple, une carte d'entrée, un connaissement ou un visa, notamment une carte à puce, en particulier avec une interface RFID et/ou NFC.

10. Jeton d'ID (106), qui est associé à un utilisateur (102), le jeton d'ID (106) présentant une mémoire électronique (118) avec une zone de mémoire sécurisée (124), dans laquelle sont stockés des attributs, où un accès à la zone de mémoire sécurisée (124) n'est possible que par le biais d'un processeur (128) du jeton d'ID (106), où le jeton d'ID (106) présente une interface de communication (108) pour la communication avec un lecteur (101) d'un système informatique d'utilisateur (100), et où le jeton d'ID (106) est conçu pour l'exécution des étapes suivantes :
- l'authentification de l'utilisateur (102) vis-à-vis du jeton d'ID (106),
- l'authentification d'un système de fournisseur d'ID v(136) vis-à-vis du jeton ID (106),
- l'authentification du jeton d'ID (106) vis-à-vis du système informatique fournisseur d'ID (136),
- l'établissement d'un premier canal de transmission sécurisé (SM[CA]#1) avec un cryptage de bout en bout entre le jeton d'ID (106) et le système informatique fournisseur d'ID (136) par le biais du réseau (116),
- le fait de faciliter un premier accès en lecture du système informatique fournisseur d'ID (136) dans le jeton d'ID (106) pour la lecture des attributs selon une première spécification d'attributs (105) à partir du jeton d'ID,
- l'envoi d'une première quantité partielle des attributs spécifiés dans la première spécification d'attributs (105) stockée dans la zone de mémoire (124) du jeton d'ID (106) à partir du jeton d'ID (106) au système informatique fournisseur d'ID (136) par le biais du premier canal de transmission sécurisé (SM[CA]#1),
- la réception d'une deuxième spécification d'attributs (111), qui spécifie les attributs en question d'une deuxième quantité partielle des attributs de la première spécification d'attributs (105), lesquels ne sont pas contenus dans la première quantité partielle, du système informatique fournisseur d'ID (136) par le jeton d'ID (106) par le biais du premier canal de transition sécurisé (SM[CA]#1),
- le stockage de la deuxième spécification d'attributs (111) dans le jeton d'ID (106),
- l'authentification d'un système informatique fournisseur d'attributs (172, 173, 174) vis-à-vis du jeton d'ID (106),
- l'authentification du jeton d'ID (106) vis-à-vis du système informatique fournisseur d'attributs (172, 173, 174),
- l'établissement d'un deuxième canal de transmission sécurisé (SM[CA]#2) avec un cryptage de bout en bout entre le système informatique fournisseur d'attributs (172, 173, 174) et le jeton d'ID (106), où le premier canal de transport sécurisé (SM[CA]#1) reste en fonction,
- la transmission de la deuxième spécification d'attributs (111) du jeton d'ID (106) au système informatique fournisseur d'attributs (172, 173, 174) par le biais du deuxième canal de transmission sécurisé (SM[CA]#2),
- le fait de faciliter un accès en écriture du système informatique fournisseur d'attributs (172, 173, 174) par le biais du deuxième canal de transmission sécurisé (SM[CA]#2) pour le stockage d'attributs selon la deuxième spécification d'attributs (111) dans le jeton d'ID,
- le fait de faciliter un deuxième accès en lecture du système informatique fournisseur d'ID (136) par le biais du premier canal de transmission sécurisé (SM[CA]#1) pour la lecture des attributs selon la deuxième spécification d'attributs (111) stockés dans le jeton d'ID (106) par le système informatique fournisseur d'attributs (172, 173, 174),
- l'effacement des attributs selon la deuxième spécification d'attributs (111) après l'accès en lecture.

11. Jeton d'ID selon la revendication 10, dans lequel l'interface de communication (108) du jeton d'ID (106) est conçue pour la communication sans fil et pour le couplage sans fil d'énergie dans le jeton d'ID (106) par le lecteur (101) afin d'alimenter le jeton d'ID (106) avec l'énergie électrique nécessaire pour son fonctionnement, où le jeton d'ID (106) présente une mémoire électronique volatile, et où le jeton d'ID (106) est conçu de manière à que la deuxième spécification d'attributs (111) soit stockée dans la mémoire électronique volatile de sorte que la deuxième spécification d'attributs (111) soit effacée de la mémoire électronique volatile lorsque le jeton d'ID (106) est hors de portée du lecteur (101), et où les attributs stockés dans le jeton d'ID (106) en raison de l'accès en écriture du système informatique fournisseur d'attributs (172, 173, 174) sont stockés dans la mémoire électronique non volatile, de sorte que l'on peut avoir accès à celle-ci par un nouveau premier accès de lecture ultérieur en raison d'une nouvelle demande de service.

12. Système informatique fournisseur d'attributs (172, 173, 174) avec une interface de réseau (138) permettant l'accès à un jeton d'ID (106) par le biais d'un réseau (116), où le système informatique fournisseur d'attributs (172, 173, 174) est conçu pour l'exécution des étapes suivantes :
- l'authentification vis-à-vis du jeton d'ID (106),
- l'authentification du jeton d'ID (106),
- l'établissement d'un deuxième canal de transmission sécurisé (SM[CA]#2) avec un cryptage de bout en bout avec le jeton d'ID (106),
- la lecture d'une spécification d'attributs (111) à partir du jeton d'ID (106) par un accès en réseau par le biais du deuxième canal de transmission sécurisé (SM[CA]#2),
- l'exécution d'un accès à une banque de données afin de lire des attributs selon la spécification d'attributs (111) à partir d'une banque de données,
- l'exécution d'un accès en écriture dans le jeton d'ID (106) par le biais du deuxième canal de transmission sécurisé (SM[CA]#2) afin d'écrire les attributs lus à partir de la banque de données dans le jeton d'ID (106),
- dans le cas où tous les attributs selon la spécification d'attributs (111) ne sont pas lisibles à partir de la banque de données, la création d'une nouvelle spécification d'attributs qui spécifie les attributs en question de la spécification d'attributs (111) qui ne sont pas contenus dans les attributs écrits dans le jeton d'ID (106) en raison de l'accès en écriture,
- le stockage de la nouvelle spécification d'attributs dans le jeton d'ID (106) afin de remplacer la spécification d'attributs précédente.

13. Système informatique fournisseur d'attributs selon la revendication 12, avec un certificat d'autorisation permettant l'authentification vis-à-vis du jeton d'ID (106), où des droits du système informatique fournisseur d'attributs (172, 173, 174) pour la lecture de la spécification d'attributs à partir du jeton d'ID (106) et pour l'écriture d'attributs dans le jeton d'ID (106) sont spécifiés dans le certificat d'autorisation.

14. Système informatique avec un jeton d'ID (106) selon l'une des revendications 10 ou 11 et avec un système informatique fournisseur d'ID (136), où le système informatique fournisseur d'ID (136) est conçu pour la lecture d'attributs à partir du jeton d'ID (106) selon la première spécification d'attributs (105) plusieurs fois les unes après les autres par le biais du même premier canal de transmission sécurisé (SM[CA]#1) pour lire des attributs à partir du jeton d'ID (106).

15. Système informatique selon la revendication 14, avec au moins un système informatique fournisseur d'attributs (172, 173, 174) selon l'une des revendications 12 ou 13.
